# EUROPEAN PATENT APPLICATION

(11) **EP 4 572 366 A1**
(43) Date of publication of application: **18.06.2025**
(21) Application number: 22954987.8
(22) Date of filing: 10.08.2022
(51) Int. Cl.: H04W 16/28, H04W 24/10

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); SUN, Weiqi, Beijing 100190 (CN); WANG, Jing, Beijing 100190 (CN); CHEN, Lan, Beijing 100190 (CN)
(74) Representative: Hoffmann Eitle
(86) International application number: PCT/JP2022/030609
(87) International publication number: WO 2024/034070

(57) **Abstract**

A terminal according to an aspect of the present disclosure includes a receiving section that receives information related to configuration of group-based beam reporting and information related to configuration of simultaneous UL transmission, and a control section that, when both of the group-based beam reporting and the simultaneous UL transmission are enabled, controls to perform UL group-based beam reporting and DL group based-beam reporting in one channel state information report.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In Rel-15 and 16 NR, reporting of two different beam indices for each report configuration is supported for a UE configured with group-based beam reporting being enabled. In Rel. 17, beam management-related enhancement for a user terminal (User Equipment (UE)) including a plurality of panels (multi-panel), a plurality of transmission/reception points (multi-Transmission/Reception Point (TRP)), and the like is supported.

In Rel. 18 (or later versions), it is also assumed that group-based beam reporting associated with UL transmission is introduced/supported.

However, progress has not yet been made on a study of how to perform the group-based beam reporting associated with the UL transmission. Unless this is made clear, appropriate TRP-to-UE communication may fail, and communication throughput may be reduced.

In view of this, the present disclosure has one object to provide a terminal, a radio communication method, and a base station that can appropriately perform group-based beam reporting associated with UL transmission.

### Solution to Problem

A terminal according to an aspect of the present disclosure includes a receiving section that receives information related to configuration of group-based beam reporting and information related to configuration of simultaneous UL transmission, and a control section that, when both of the group-based beam reporting and the simultaneous UL transmission are enabled, controls to perform UL group-based beam reporting and DL group based-beam reporting in one channel state information report.

### Advantageous Effects of Invention

According to an aspect of the present disclosure, it is possible to appropriately perform group-based beam reporting associated with UL transmission.

### Brief Description of Drawings

[FIG. 1] FIGS. 1A and 1B are diagrams to show examples of RRC information elements related to respective ones of CSI report configuration and CSI resource configuration.
[FIG. 2] FIGS. 2A and 2B are diagrams to show examples of RRC information elements related to respective ones of an NZP CSI-RS resource set and a CSI-SSB resource set.
[FIG. 3] FIG. 3 is a diagram to show an example of an RRC information element related to a TCI state.
[FIG. 4] FIGS. 4A and 4B are diagrams to show examples of single-panel UL transmission.
[FIG. 5] FIGS. 5A to 5C are diagrams to show respective examples of schemes 1 to 3 for simultaneous UL transmission using multi-panel.
[FIG. 6] FIGS. 6A to 6C are diagrams to show examples of a PUSCH transmission scheme.
[FIG. 7] FIGS. 7A to 7C are diagrams to show other examples of the PUSCH transmission scheme.
[FIG. 8] FIG. 8 is an excerpt of an RRC information element "CSI-ReportConFIG."
[FIG. 9] FIG. 9 is a diagram to show an example of a CSI report in Rel-15 NR.
[FIG. 10] FIG. 10 is a diagram to show an example of a CSI report for multi-group-based beam reporting in Rel-17 (or later versions) NR.
[FIG. 11] FIG. 11 is a diagram to show an example of UL group-based beam reporting according to a first embodiment.
[FIG. 12] FIG. 12 is a diagram to show another example of the UL group-based beam reporting according to the first embodiment.
[FIG. 13] FIG. 13 is a diagram to show another example of the UL group-based beam reporting according to the first embodiment.
[FIG. 14] FIG. 14 is a diagram to show another example of the UL group-based beam reporting according to the first embodiment.
[FIG. 15] FIG. 15 is a diagram to show another example of the UL group-based beam reporting according to the first embodiment.
[FIG. 16] FIG. 16 is a diagram to show another example of the UL group-based beam reporting according to the first embodiment.
[FIG. 17] FIG. 17 is a diagram to show an example of UL group-based beam reporting according to a second embodiment.
[FIG. 18] FIG. 18 is a diagram to show another example of the UL group-based beam reporting according to the second embodiment.
[FIG. 19] FIG. 19 is a diagram to show another example of the UL group-based beam reporting according to the second embodiment.
[FIG. 20] FIG. 20 is a diagram to show another example of the UL group-based beam reporting according to the second embodiment.
[FIG. 21] FIG. 21 is a diagram to show an example of UL group-based beam reporting according to a third embodiment.
[FIG. 22] FIG. 22 is a diagram to show another example of the UL group-based beam reporting according to the third embodiment.
[FIG. 23] FIG. 23 is a diagram to show an example of a schematic structure of a radio communication system according to one embodiment.
[FIG. 24] FIG. 24 is a diagram to show an example of a structure of a base station according to one embodiment.
[FIG. 25] FIG. 25 is a diagram to show an example of a structure of a user terminal according to one embodiment.
[FIG. 26] FIG. 26 is a diagram to show an example of a hardware structure of the base station and the user terminal according to one embodiment.
[FIG. 27] FIG. 27 is a diagram to show an example of a vehicle according to one embodiment.

### Description of Embodiments

### (CSI)

In NR, a UE measures a channel state using a reference signal (or a resource for the reference signal), and feeds back (reports) channel state information (CSI) to a network (for example, a base station).

The UE may measure the channel state using at least one of a channel state information reference signal (CSI-RS), a synchronization signal/broadcast channel (Synchronization Signal/Physical Broadcast Channel (SS/PBCH)) block, a synchronization signal (SS), a demodulation reference signal (DMRS), and the like.

A CSI-RS resource may include at least one of a non-zero power (NZP) CSI-RS resource, a zero power (ZP) CSI-RS resource, and a CSI interference measurement (CSI-IM) resource.

A resource for measuring a signal component for the CSI may be referred to as a signal measurement resource (SMR) or a channel measurement resource (CMR). The SMR (CMR) may include, for example, the NZP CSI-RS resource, SSB, and the like for channel measurement.

A resource for measuring an interference component for the CSI may be referred to as an interference measurement resource (IMR). The IMR may include, for example, at least one of an NZP CSI-RS resource, SSB, ZP CSI-RS resource, and CSI-IM resource for interference measurement.

The SS/PBCH block is a block including a synchronization signal (for example, a primary synchronization signal (PSS), a secondary synchronization signal (SSS)) and a PBCH (and a corresponding DMRS), and may be referred to as an SS block (SSB) or the like.

Note that the CSI may include at least one of a channel quality indicator (CQI), a precoding matrix indicator (PMI), a CSI-RS resource indicator (CRI), an SS/PBCH block resource indicator (SSBRI), a layer indicator (LI), a rank indicator (RI), L1-RSRP (reference signal received power in Layer 1 (Layer 1 Reference Signal Received Power)), L1-RSRQ (Reference Signal Received Quality), an L1-SINR (Signal to Interference plus Noise Ratio), an L1-SNR (Signal to Noise Ratio), and the like.

The CSI may have a plurality of parts. CSI part 1 may include information with a relatively small number of bits (for example, the RI). CSI part 2 may include information with a relatively large number of bits (for example, the CQI), such as information determined based on CSI part 1.

The CSI may be classified into several CSI types. An information type, a size, and the like to be reported may vary depending on the CSI type. For example, a CSI type configured for performing communication using a single beam (also referred to as type 1 (type I) CSI, CSI for a single beam, or the like), and a CSI type configured for performing communication using multiple beams (also referred to as type 2 (type II) CSI, CSI for multiple beams, or the like) may be defined. Usage of the CSI type is not limited to this.

As a method for feeding back the CSI, periodic CSI (P-CSI) reporting, aperiodic CSI (A-CSI) reporting, semi-persistent CSI (SP-CSI) reporting, and the like are under study.

The UE may be notified of CSI measurement configuration information using higher layer signaling, physical layer signaling, or a combination of these.

In the present disclosure, the higher layer signaling may be, for example, any one or combinations of Radio Resource Control (RRC) signaling, Medium Access Control (MAC) signaling, broadcast information, and the like.

The MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

The physical layer signaling may be, for example, downlink control information (DCI).

The CSI measurement configuration information may be configured using, for example, an RRC information element "CSI-MeasConFIG." The CSI measurement configuration information may include CSI resource configuration information (an RRC information element "CSI-ResourceConfig"), CSI report configuration information (an RRC information element "CSI-ReportConfig"), and the like. The CSI resource configuration information relates to a resource for CSI measurement, and the CSI report configuration information relates to how the UE performs CSI reporting.

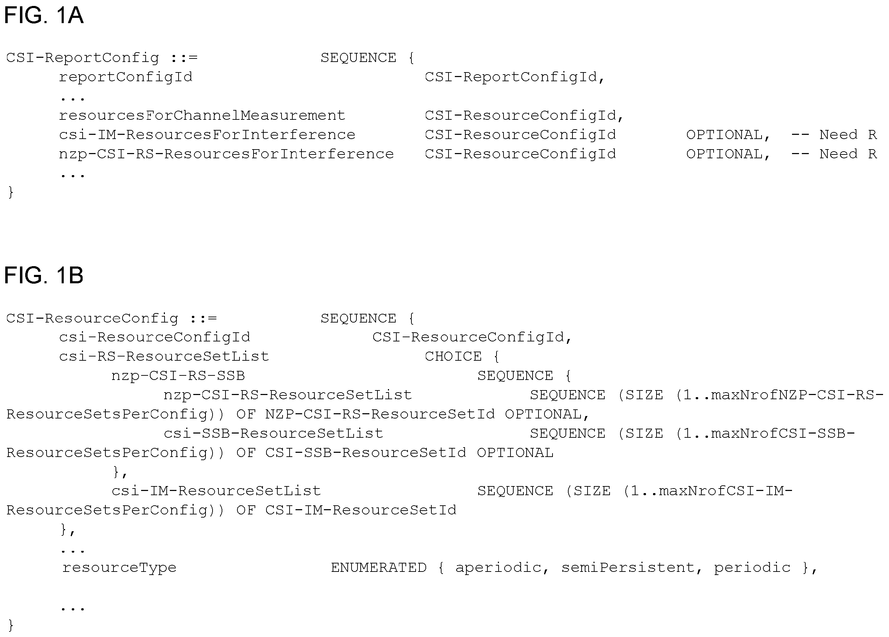

FIGS. 1A and 1B are diagrams to show examples of the RRC information elements related to respective ones of CSI report configuration and CSI resource configuration. The present example shows an excerpt of a field (which may be referred to as a parameter) included in the information element. FIGS. 1A and 1B are described using ASN.1 (Abstract Syntax Notation One) notation. Note that drawings related to other RRC information elements (or RRC parameters) of the present disclosure are also described using the same notation.

As shown in FIG. 1A, the CSI report configuration information ("CSI-ReportConfig") includes channel measurement resource information ("resourcesForChannelMeasurement"). The CSI report configuration information may also include interference measurement resource information (for example, interference measurement NZP CSI-RS resource information ("nzp-CSI-RS-ResourcesForInterference"), interference measurement CSI-IM resource information ("csi-IM-ResourcesForInterference"), and the like). These resource information correspond to CSI resource configuration information IDs (Identifiers) ("CSI-ResourceConfigId").

Note that one or a plurality of the CSI resource configuration information IDs (which may be referred to as CSI resource configuration IDs) corresponding to the respective resource information may be the same value, or may be different values.

As shown in FIG. 1B, the CSI resource configuration information ("CSI-ResourceConfig") may include a CSI resource configuration information ID, CSI-RS resource set list information ("csi-RS-ResourceSetList"), a resource type ("resourceType"), and the like. The CSI-RS resource set list may include at least one of information on an NZP CSI-RS and SSB for measurement ("nzp-CSI-RS-SSB") and CSI-IM resource set list information ("csi-IM-ResourceSetList").

The resource type indicates behavior of a time domain of this resource configuration, and "aperiodic," "semi-persistent," and "periodic" can be configured for the resource type. For example, CSI-RSs corresponding to "aperiodic," "semi-persistent," and "periodic" may be referred to as an A-CSI-RS, an SP-CSI-RS, and a P-CSI-RS, respectively.

Note that the channel measurement resource may be used for, for example, calculation of the CQI, PMI, L1-RSRP, and the like. The interference measurement resource may be used for calculation of the L1-SINR, L1-SNR, L1-RSRQ, and another interference-related indicator.

When the interference measurement is performed by CSI-IM, each CSI-RS for channel measurement may be associated with a CSI-IM resource, in terms of a resource, based on the order of a CSI-RS resource and a CSI-IM resource in a corresponding resource set.

"nzp-CSI-RS-SSB" may include NZP CSI-RS resource set list information ("nzp-CSI-RS-ResourceSetList") and SSB resource set list information for CSI measurement ("csi-SSB-ResourceSetList"). Each of these list information corresponds to one or more NZP CSI-RS resource set IDs ("NZP-CSI-RS-ResourceSetId") and CSI-SSB resource set IDs ("CSI-SSB-ResourceSetId"), and may be used for identifying a measurement target resource.

The NZP CSI-RS resource set list information ("nzp-CSI-RS-ResourceSetList") may include an NZP CSI-RS resource set ID ("NZP-CSI-RS-ResourceSetId") of a maximum number of NZP CSI-RS resource sets per CSI resource configuration ("maxNrofNZP-CSI-RS-ResourceSetsPerConfig"). The maximum number of NZP CSI-RS resource sets per CSI resource configuration ("maxNrofNZP-CSI-RS-ResourceSetsPerConfig") may be up to 16 when the resource type is "aperiodic," otherwise (when the resource type is "semi-persistent" or "periodic") the maximum number may be 1.

The SSB resource set list information for CSI measurement ("csi-SSB-ResourceSetList") may include a CSI-SSB resource set ID ("CSI-SSB-ResourceSetId") of a maximum number of SSB resource sets for CSI measurement per CSI resource configuration ("maxNrofCSI-SSB-ResourceSetsPerConfig"). The maximum number of SSB resource sets for CSI measurement per CSI resource configuration ("maxNrofCSI-SSB-ResourceSetsPerConfig") may be 1.

The CSI-IM resource set list information ("csi-IM-ResourceSetList") may include a CSI-IM resource set ID ("CSI-IM-ResourceSetId") of a maximum number of CSI-IM resource sets per CSI resource configuration ("maxNrofCSI-IM-ResourceSetsPerConfig"). The maximum number of CSI-IM resource sets per CSI resource configuration ("maxNrofCSI-IM-ResourceSetsPerConfig") may be up to 16 when the resource type is "aperiodic," otherwise the maximum number may be 1.

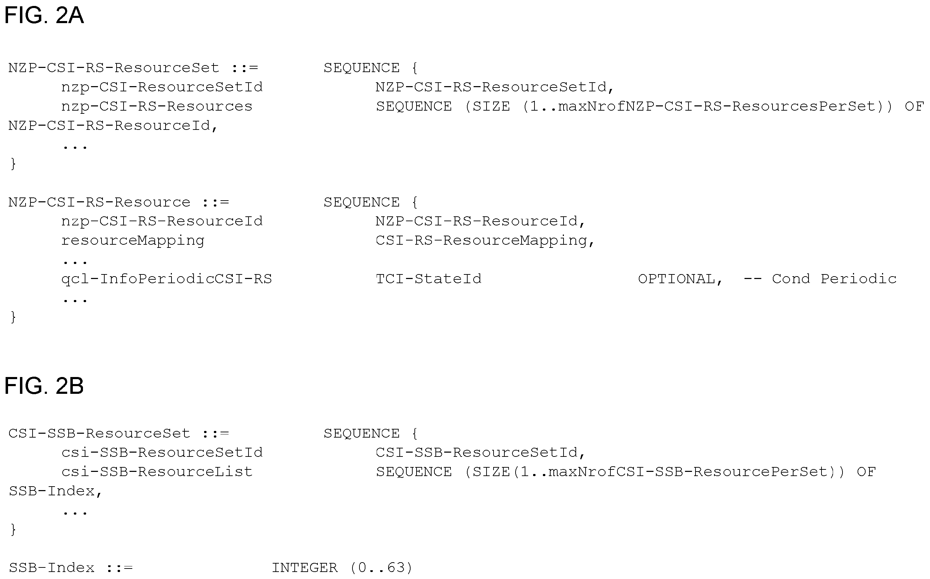

FIGS. 2A and 2B are diagrams to show examples of RRC information elements related to respective ones of an NZP CSI-RS resource set and a CSI-SSB resource set.

As shown in FIG. 2A, NZP CSI-RS resource set information ("NZP-CSI-RS-ResourceSet") includes an NZP CSI-RS resource set ID and one or more NZP CSI-RS resource IDs ("NZP-CSI-RS-ResourceId").

NZP CSI-RS resource information ("NZP-CSI-RS-Resource") may include an NZP CSI-RS resource ID and an ID ("TCI-stateId") of a transmission configuration indication state (TCI state). The TCI state will be described below.

As shown in FIG. 2B, CSI-SSB resource set information ("CSI-SSB-ResourceSet") includes a CSI-SSB resource set ID and one or more SSB index information ("SSB-Index"). The SSB index information is, for example, an integer between 0 and 63, and may be used for identifying an SSB in an SS burst.

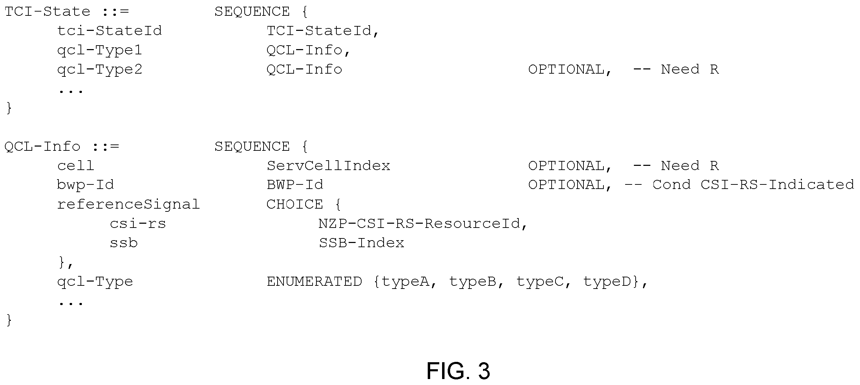

FIG. 3 is a diagram to show an example of the RRC information element related to the TCI state.

The TCI state is information related to quasi-co-location (QCL) of a channel or signal, and may be referred to as a spatial reception parameter, spatial relation information (spatial reception info), or the like. The TCI state may be configured or specified for the UE for each channel or for each signal.

As shown in FIG. 3, TCI state information ("TCI-State") may include a TCI state ID and one or more QCL information ("QCL-Info"). The QCL information may include at least one of information related to a reference signal of a QCL source (RS-related information "referenceSignal") and information indicating a QCL type (QCL type information ("qcl-Type")). The RS-related information may include information such as an RS index (for example, an NZP CSI-RS resource ID or an SSB index), a serving cell index, and an index of a BWP (Bandwidth Part) in which an RS is located.

For at least one of a signal and a channel (expressed as a signal/channel), the UE may control reception processing (for example, at least one of reception, demapping, demodulation, decoding, determination of a receive beam, and the like), transmission processing (for example, at least one of transmission, mapping, modulation, coding, determination of a transmit beam, and the like), and the like, based on a TCI state corresponding to a TCI state ID associated with the signal/channel.

As shown in FIG. 2A, for the P-CSI-RS, an associated TCI state may be configured by RRC. Note that, for the P-CSI-RS, the SP-CSI-RS, and the A-CSI-RS, the associated TCI state may be judged based on higher layer signaling, physical layer signaling, or a combination of these.

In Rel. 17/18 (or later versions), it is assumed that UL transmission using a plurality of UE panels is supported.

### (Single-panel Transmission)

At least one of Transmission Schemes A and B below (single-panel UL transmission schemes A and B) may be applied to a single-panel UL transmission scheme or candidates for the single-panel UL transmission scheme. Note that, in the present disclosure, a panel / UE panel may be interpreted as a UE capability value set reported for each UE capability.

### {Transmission Scheme A: Single-panel Single-TRP UL Transmission}

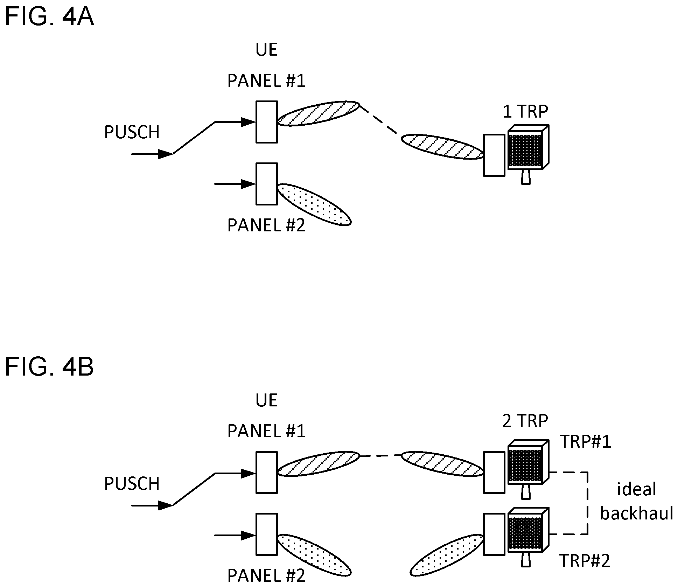

In Rel. 15 and Rel. 16, the UE uses a transmission scheme in which UL is transmitted to one TRP from only one beam and panel at one timing (FIG. 4A).

### {Transmission Scheme B: Single-panel Multi-TRP UL Transmission}

For Rel. 17, it is studied that UL transmission from only one beam and panel is performed at one timing and repetition transmission to a plurality of TRPs is performed (FIG. 4B). In an example in FIG. 4B, the UE transmits a PUSCH to TRP #2 from panel #2 after transmitting a PUSCH to TRP #1 from panel #1 (switching the beam and panel). The two TRPs are connected to each other via an ideal backhaul.

### (Multi-panel Transmission)

For Rel. 18 (or later versions), it is studied that for UL throughput/reliability enhancement, simultaneous UL transmission (for example, Simultaneous Transmission across multiple panels (STxMP) or simultaneous multi-panel UL transmission (SiMPUL)) using a plurality of panels is supported for one or more TRPs. For a given UL channel (for example, PUSCH/PUCCH) and the like, a multi-panel UL transmission scheme is also under study.

As multi-panel UL transmission, up to X panels (for example, X = 2) and up to Y panels (for example, Y = 2) may be supported, for example. When UL precoding indication for a PUSCH is supported in the multi-panel UL transmission, a codebook for existing systems (for example, Rel. 16 (or earlier versions)) may be supported for multi-panel simultaneous transmission. When single-DCI and multi-DCI based multi-TRP operations are considered, the number of layers and the number of codewords (CWs) may be up to x (for example, x = 4) and up to y (for example, y = 2) in all the panels, respectively.

For a multi-panel UL transmission scheme or candidates for the multi-panel UL transmission scheme, at least one of schemes 1 to 3 below (multi-panel UL transmission schemes 1 to 3) is under study. Only one of Transmission Schemes 1 to 3 may be supported. A plurality of schemes including at least one of Transmission Schemes 1 to 3 may be supported, and one of the plurality of transmission schemes may be configured for the UE.

### {Transmission Scheme 1: Coherent Multi-panel UL Transmission}

A plurality of panels may be synchronized with each other. All the layers are mapped to all the panels. A plurality of analog beams are indicated. An SRS resource indicator (SRI) field may be enhanced. This scheme may use up to four layers for UL.

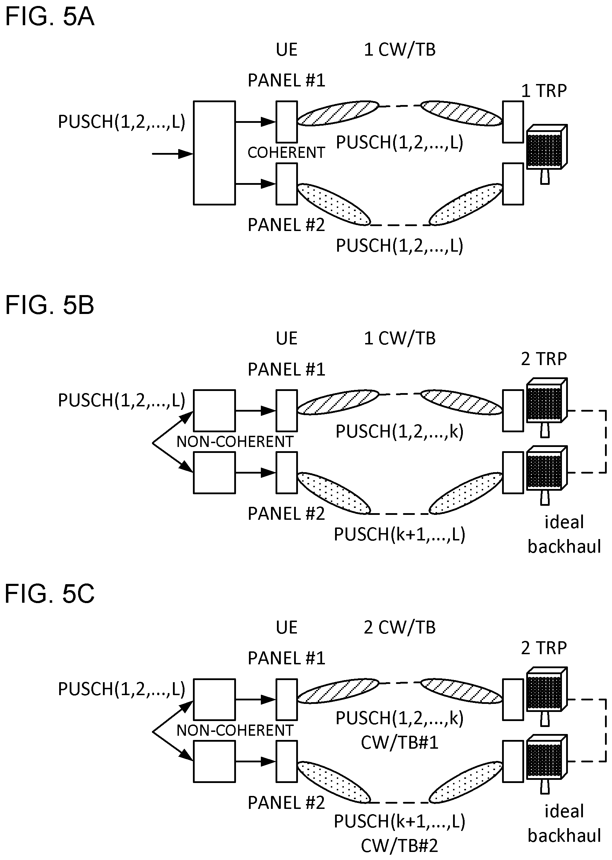

In an example in FIG. 5A, the UE maps one codeword (CW) or one transport block (TB) to L layers (PUSCH (1, 2, ..., L)) to transmit L layers from each of the two panels. Panel #1 and panel #2 are coherent with each other. Transmission scheme 1 can obtain a gain by diversity. A total number of layers in the two panels is 2L. When a maximum value of the total number of layers is 4, a maximum value of the number of layers in one panel is 2.

### {Transmission Scheme 2: Non-coherent Multi-panel UL Transmission with One Codeword (CW) or Transport Block (TB)}

A plurality of panels may not be synchronized with each other. Different layers are mapped to different panels and one CW or TB for PUSCHs from the plurality of panels. Layers corresponding to one CW or TB may be mapped to the plurality of panels. This transmission scheme may use up to four layers or up to eight layers for UL. When up to eight layers are supported, this transmission scheme may support one CW or TB using up to eight layers.

In an example in FIG. 5B, the UE maps 1 CW or 1 TB to k layers (PUSCH (1, 2, ..., k)) and L-k layers (PUSCH (k+1, k+2, ..., L)) to transmit k layers and L-k layers from panel #1 and panel #2, respectively. Transmission scheme 2 can obtain a gain by multiplexing and diversity. A total number of layers in the two panels is L.

### {Transmission Scheme 3: Non-coherent Multi-panel UL Transmission with Two CWs or TBs}

A plurality of panels may not be synchronized with each other. Different layers are mapped to different panels and two CWs or TBs for PUSCHs from the plurality of panels. Layers corresponding to one CW or TB may be mapped to one panel. Layers corresponding to a plurality of CWs or TBs may be mapped to different panels. This transmission scheme may use up to four layers or up to eight layers for UL. When up to eight layers are supported, this transmission scheme may support up to four layers per CW or TB.

In an example in FIG. 5C, the UE maps CW #1 or TB #1 and CW #2 or TB #2 of the two CWs or 2 TBs to k layers (PUSCH (1, 2, ..., k)) and L-k layers (PUSCH (k+1, k+2, ..., L)), respectively, to transmit k layers and L-k layers from panel #1 and panel #2, respectively. Transmission scheme 3 can obtain a gain by multiplexing and diversity. A total number of layers in the two panels is L.

In each of the above-described transmission schemes, the base station may configure or indicate panel-specific transmission for UL transmission using UL TCI or a panel ID. The UL TCI (UL TCI state) may be based on signaling similar to DL beam indication supported in Rel. 15. The panel ID may be implicitly or explicitly applied to transmission of at least one of a target RS resource or target RS resource set, a PUCCH, an SRS, and a PRACH. When the panel ID is explicitly notified, the panel ID may be configured in at least one of a target RS, a target channel, and a reference RS (for example, DL RS resource configuration or spatial relationship information).

For the above-described one or more transmission schemes/modes, multi-panel UL transmission (for example, Simultaneous Transmission across multiple panels (STxMP) or simultaneous multi-panel UL transmission (SiMPUL)) for scheduling of a PUSCH based on one DCI (single DCI) / scheduling of a PUSCH based on a plurality of DCIs (multi-DCI) is under study.

### (Simultaneous Multi-panel Transmission)

For the above-described one or more transmission schemes/modes, multi-panel UL transmission (for example, simultaneous multi-panel transmission (STxMP)) for scheduling of a PUSCH based on one DCI (single DCI) / scheduling of a PUSCH based on a plurality of DCIs (multi-DCI) is under study.

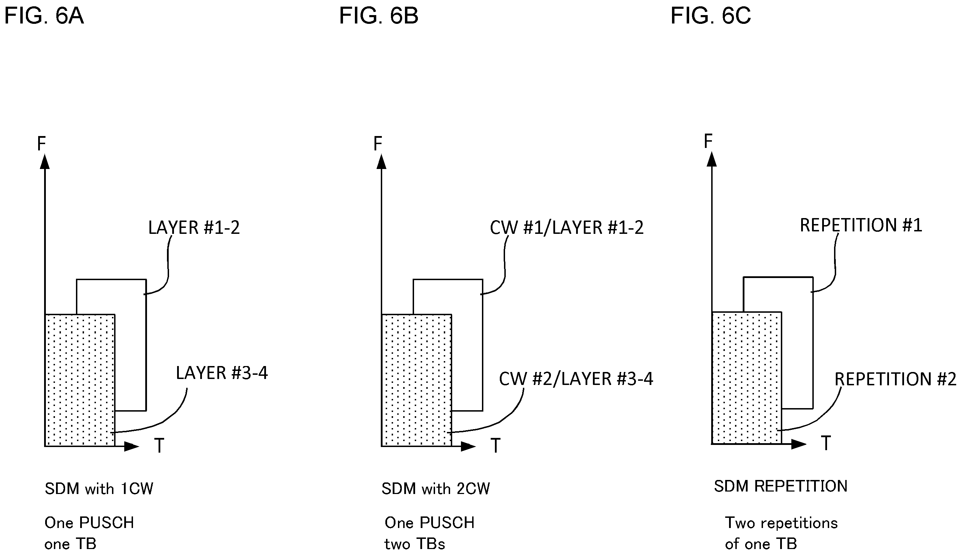

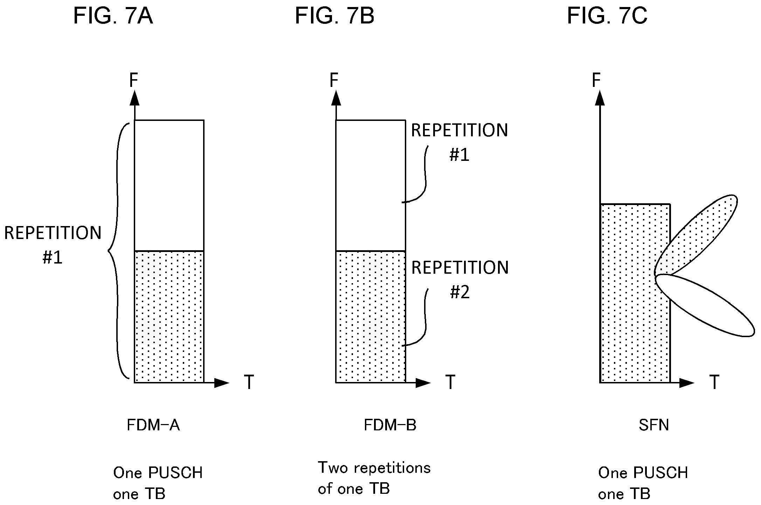

In simultaneous multi-panel transmission (STxMP) in a single-DCI based multi-TRP system, the following schemes may be applied to UL transmission (for example, the PUSCH).
- Space division multiplexing (SDM) scheme: different layers / DMRS ports for one PUSCH are separately precoded and simultaneously transmitted from different UE beams/panels (see FIGS. 6A and 6B).
- Space division multiplexing repetition (SDM repetition) scheme: two PUSCH transmission occasions with different redundancy versions (RVs) of the same TB are simultaneously transmitted from two different UE beams/panels on the same time and frequency resources (see FIG. 6C).
- Frequency division multiplexing (FDM)-A scheme: different parts of a frequency domain resource for one PUSCH transmission occasion are transmitted from different UE beams/panels (see FIG. 7A).
- FDM-B scheme: two PUSCH transmission occasions with same/different RVs of the same TB are transmitted from different UE beams/panels on non-overlapping frequency domain resources and the same time domain resource (see FIG. 7B).
- SFN based transmission scheme: all the same layers / DMRS ports for one PUSCH are simultaneously transmitted from two different UE beams/panels (see FIG. 7C).

Note that, in the present disclosure, repetition transmission and transmission may be interchangeably interpreted. Transmission of a plurality of TBs may mean transmission of a plurality of the same TBs or transmission of different TBs.

### {Space Division Multiplexing (SDM)}

The UE may assume that PUSCH repetition transmissions to which space division multiplexing (SDM) is applied are scheduled in the same time resource and the same frequency resource. In other words, when a plurality of coherent panels are used, the UE may transmit PUSCH repetition transmissions to which SDM is applied, in the same time resource and the same frequency resource.

FIG. 6A is a diagram to show an example of the repetition transmissions to which SDM is applied with one CW. In FIG. 6A, respective time resources and frequency resources for layers #1-2 and layers #3-4 corresponding to a PUSCH/PUCCH are the same.

FIG. 6B is a diagram to show an example of the repetition transmissions to which SDM is applied with two CWs. In FIG. 6B, respective time resources and frequency resources for CW #1 and CW #2 corresponding to a PUSCH/PUCCH are the same.

FIG. 6C is a diagram to show an example of the repetition transmissions to which SDM is applied. In FIG. 6C, respective time resources and frequency resources for repetitions #1 and #2 of a PUSCH/PUCCH are the same.

Note that, in the PUSCH transmissions to which SDM is applied (for example, the PUSCH repetition transmissions), at least parts of the respective time and frequency resources may overlap each other.

### {Frequency Division Multiplexing (FDM)}

The UE may assume that PUSCH/PUCCH repetition transmissions to which frequency division multiplexing (FDM) is applied are scheduled in the same time resource and different frequency resources. In other words, when a plurality of coherent panels are used, the UE may transmit PUSCH/PUCCH repetition transmissions to which FDM is applied, in the same time resource and different frequency resources.

FIG. 7A is a diagram to show a first example of the repetition transmissions to which FDM (FDM-A) is applied. FIG. 7A shows an example in which one PUSCH/PUCCH repetition transmission is performed per TB/UCI.

FIG. 7B is a diagram to show a second example of the repetition transmissions to which FDM (FDM-B) is applied. FIG. 7B shows an example in which two PUSCH/PUCCH repetition transmissions are performed per TB/UCI.

FIG. 7C is a diagram to show an example of repetition transmissions to which a single frequency network (SFN) is applied. FIG. 7C shows an example in which one PUSCH/PUCCH is transmitted per TB/UCI using different beams/panels.

As shown in FIGS. 6A and 6B, when the simultaneous multi-panel transmission based on the space division multiplexing scheme (STxMP SDM scheme) is performed for non-codebook PUSCH transmission, different layers / DMRS ports for one PUSCH can be separately precoded and simultaneously transmitted from different UE panels.

### (UE Capability Value Set)

Rel-17 (or later versions) NR supports reporting of a list of UE capability value sets in a UE capability report. The UE capability value sets may mean panels supported/used by the UE. The UE capability value sets may be interpreted as UE capability values.

Each UE capability value set in Rel. 17 may be configured based on a maximum number of supported SRS ports. For example, when the maximum number of SRS ports is X, the UE reports X (for example, X = 4) UE capability value sets.

The UE reports a list of UE capability value sets, thereby allowing UE-led panel activation and selection to be performed. Correspondence between a reported CSI-RS/SSB resource index (CRI/SSBRI) and one of the UE capability value sets in the reported list may be determined by the UE and notified to a NW in a beam reporting instance.

Rel-17 (or later versions) NR supports a case that the UE reports a list of UE capability value sets to promote UE-led panel activation and selection. Each UE capability value set included in the list is constituted by a maximum number of supported SRS ports, and any two UE capability value sets may be configured differently (or separately). The UE capability value sets may be configured in common for a plurality of (or all the) BWPs/CCs in the same band, or may be configured in common for a plurality of (or all the) BWPs/CCs in the same band combination (BC).

Each UE capability value set in Rel. 17 is constituted by a maximum number of supported SRS ports. In Rel. 18 (or later versions), the UE capability value set may be constituted by at least one of a maximum UL rank, a maximum number of beams, a maximum number of SRS resource sets, a maximum number of SRS resources, a maximum number of SRS resources per set, an EIRP, and a transmission power-related capability, in addition to (or in place of) the maximum number of supported SRS ports.

A case where a plurality of (for example, two) UE capability value sets are configured differently may mean that any two capability value sets include different maximum numbers of supported SRS ports. Note that the plurality of (for example, two) UE capability value sets may include the same capability. For example, the two UE capability value sets may include the same maximum number of supported SRS ports. In this case, for the two UE capability value sets with the same maximum number of supported SRS ports, other parameters (for example, EIRPs) may be configured differently.

### (Beam Management)

For Rel-15 NR, a beam management (BM) method has been studied. In the beam management, beam selection is performed based on L1-RSRP reported by a UE. Changing (switching) a beam of a certain signal/channel may correspond to changing at least one of a TCI state and QCL assumption for the signal/channel.

The UE may report (transmit) a measurement result for the beam management using an uplink control channel (Physical Uplink Control Channel (PUCCH)) or an uplink shared channel (Physical Uplink Shared Channel (PUSCH)). The measurement result may be, for example, CSI including at least one of L1-RSRP, L1-RSRQ, L1-SINR, L1-SNR, and the like.

The measurement result (for example, the CSI) reported for the beam management may be referred to as beam measurement, a beam measurement report, beam reporting (beam report), beam report CSI, and so on.

CSI measurement for the beam report may include interference measurement. The UE may measure channel quality, interference, and the like using a resource for the CSI measurement to derive the beam report.

The beam report may include a result of at least one of channel quality measurement and interference measurement. The result of the channel quality measurement may include, for example, L1-RSRP. The result of the interference measurement may include an L1-SINR, an L1-SNR, L1-RSRQ, other interference-related indicators (for example, any indicator other than the L1-RSRP), and the like.

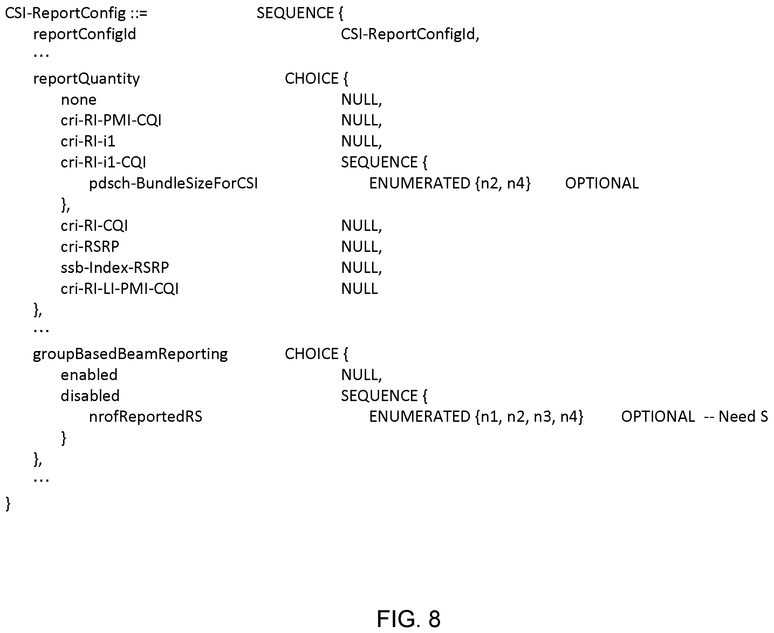

CSI reporting may be performed based on CSI report configuration configured by a higher layer parameter. FIG. 8 is an example of an RRC information element "CSI-ReportConfig" in Rel. 16. FIG. 8 excerpts another point of the same CSI report configuration information (CSI-ReportConfig) as that of FIG. 1A.

The CSI report configuration information may include a "report quantity" (which may be represented by an RRC parameter "reportQuantity") being information on a parameter reported by one reporting instance (for example, single CSI). The report quantity is defined by an ASN.1 object type "choice type (choice)." Thus, one of parameters (cri-RSRP, ssb-Index-RSRP, and the like) defined as the report quantity is configured.

For each report configuration (report setting), the UE configured with a higher layer parameter (for example, an RRC parameter "groupBasedBeamReporting" related to group-based beam reporting) being disabled included in the CSI report configuration information may include, in a beam report (one reporting instance), a different number of beam measurement resource IDs (for example, SSBRIs, CRIs) with a higher layer parameter (for example, an RRC parameter "nrofReportedRS" indicating the number of RSs to be reported) included in the CSI report configuration information, and measurement results (for example, L1-RSRP) corresponding to the respective IDs.

For each report configuration, the UE configured with groupBasedBeamReporting being enabled reports CRIs/SSBRIs in units of a group (for example, CRIs/SSBRIs of one group). The group includes a plurality of (for example, two) CRIs/SSBRIs. The plurality of (for example, two) CRIs/SSBRIs may mean simultaneous reception by the UE.

For example, for each report configuration, the UE configured with groupBasedBeamReporting being enabled may include, in the beam report, two different beam measurement resource IDs (for example, CRIs/SSBRIs) and two measurement results (for example, L1-RSRP) corresponding to the respective IDs. The two beam measurement resources (CSI-RS resources, SSB resources) may be simultaneously received by the UE using one spatial domain reception filter, or may be simultaneously received by the UE using a plurality of simultaneous spatial domain reception filters.

The NZP CSI-RS resource set information shown in FIG. 2A may include information related to repetition in resources in the resource set. The information related to the repetition may indicate, for example, 'ON' or 'OFF.' Note that 'ON' may be represented as 'enabled (or valid)' and 'OFF' may be represented as 'disabled (or invalid).'

For example, for the resource set configured with the repetition being 'ON,' the UE may assume that resources in the resource set have been transmitted using the same downlink spatial domain transmission filter. In this case, the UE may assume that the resources in the resource set have been transmitted using the same beam (using, for example, the same beam from the same base station).

For the resource set configured with the repetition being 'OFF,' the UE may perform control in which the UE is not allowed to assume (or may not assume) that resources in the resource set have been transmitted using the same downlink spatial domain transmission filter. In this case, the UE may assume that the resources in the resource set are not transmitted using the same beam (have been transmitted using different beams). In other words, for the resource set configured with the repetition being 'OFF,' the UE may assume that the base station is performing beam sweeping.

In Rel-15 NR, cri-RSRP and ssb-Index-RSRP of the report quantity are associated with the beam management. The UE configured with cri-RSRP as the report quantity reports a CRI and L1-RSRP corresponding to the CRI. The UE configured with ssb-Index-RSRP as the report quantity reports an SSBRI and L1-RSRP corresponding to the SSBRI.

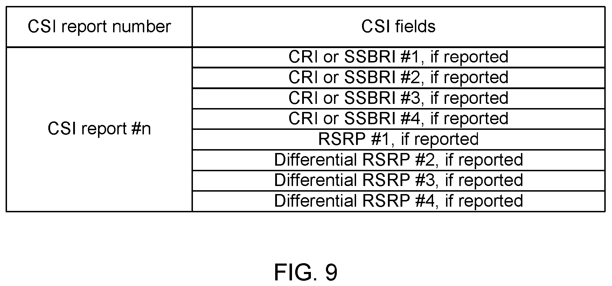

FIG. 9 is a diagram to show an example of a CSI report in Rel-15 NR. FIG. 9 shows a mapping order of CSI fields included in one CSI report (n-th CSI report #n) for CSI/RSRP or SSBRI/RSRP reporting defined in Rel. 15.

The CSI report in FIG. 9 can include one or more combinations of a CRI/SSBRI and RSRP. The number of these combinations may be configured by a higher layer parameter (for example, an RRC parameter "nrofReportedRS") indicating the number of reference signal resources to be reported.

For L1-RSRP reporting, when nrofReportedRS is set to 1 ('n1' as a value), the CSI report includes RSRP #1 being a field with a given number of bits (for example, m bits) indicating L1-RSRP of the highest measurement value. In Rel-15 NR, m = 7.

For the L1-RSRP reporting, when nrofReportedRS is configured to be greater than 1 or when groupBasedBeamReporting is configured to be enabled, the UE uses a differential L1-RSRP-based report. Specifically, the UE includes, in the same CSI report (reporting instance), RSRP #1 indicating the L1-RSRP of the highest measurement value and differential RSRP #k computed (as, for example, a difference from the measurement value) by referring to the highest measurement value for the k th (in FIG. 9, k = 2, 3, or 4) highest L1-RSRP. Here, differential RSRP #k may be a field with bits (for example, n bits) less than the above-described given number. In Rel-15 NR, n = 4.

For example, for each group, an absolute RSRP value of 7 bits (range from -140 to -44 dBm using 1 dB step size) for a first beam and a differential RSRP value of 4 bits for a second beam are reported.

Note that when groupBasedBeamReporting is configured to be enabled, the UE includes RSRP #1 and differential RSRP #2 in the same CSI report.

CRI/SSBRI #k in FIG. 9 is a field indicating a CRI/SSBRI corresponding to RSRP #k or differential RSRP #k (is included in a case where RSRP #k or differential RSRP #k is reported).

Note that, in Rel-16 (or later versions) NR, nrofReportedRS may be a value being 4 or greater or may be 4 or greater. The CSI report may include 4 or more combinations of a CRI/SSBRI and RSRP. m, n, and the like described above are not limited to 7, 4, and the like, respectively.

L1-SINR reporting may be performed in Rel-16 (or later versions) NR. The description obtained by interpreting the RSRP in the above-described L1-RSRP reporting as an SINR may be applied to the L1-SINR reporting. Note that, in this case, configuration/parameter for the SINR may be different from the configuration/parameter for the RSRP, and for example, nrofReportedRS and nrofReportedRSForSINR indicating the number of reference signal resources to be reported for the SINR may be used interchangeably.

For computation of L1-RSRP, the UE may be configured with a CSI-RS resource setting for up to 16 CSI-RS resource sets including up to 64 resources in each resource set. A total number of different CSI-RS resources across all the resource sets may be 128 or less.

For computation of an L1-SINR, in channel measurement, the UE may be configured with a CSI-RS resource setting for up to 16 CSI-RS resource sets including a total of up to 64 CSI-RS resources or up to 64 SS/PBCH blocks.

When one resource setting linked to CSI-ReportConfig includes a plurality of aperiodic resource sets for the UE configured with CSI aperiodic trigger state list information (higher layer parameter "CSI-AperiodicTriggerStateList"), only one of aperiodic CSI-RS resources of the resource setting may be associated with a trigger state. In this case, the UE may be configured to select one CSI-IM/NZP CSI-RS resource set from the resource setting, by a higher layer, for each trigger state, for each resource setting.

The UE may not assume (expect, assume) that at least one of more than 64 NZP CSI-RS resources and SS/PBCH block resources is configured in a channel measurement resource setting for CSI-ReportConfig with a report quantity (higher layer parameter "reportQuantity") set to "none," "cri-RI-CQI," "cri-RSRP," "ssb-Index-RSRP," "cri-SINR," or "ssb-Index-SINR."

When the UE is configured with CSI-ReportConfig with a report quantity (higher layer parameter "reportQuantity") set to "cri-RSRP," "cri-SINR," or "none," and this CSI-ReportConfig is linked to a resource setting with a higher layer parameter "resourceType" set to "aperiodic," the UE may not assume that more than 16 CSI-RS resources are configured in a CSI-RS resource set included in the resource setting.

When the UE is configured with CSI-ReportConfig with a report quantity (higher layer parameter "reportQuantity") set to "cri-RSRP," "cri-RI-PMI-CQI," "cri-RI-i1," "cri-RI-i1-CQI," "cri-RI-CQI," "cri-RI-LI-PMI-CQI," or "cri-SINR," and two or more channel measurement resources are configured in a corresponding resource set, the UE may derive a CSI parameter other than CRIs, under a condition of a reported CRI. Here, CRI k (k≥0) may correspond to the configured k+1 th entry of associated nzp-CSI-RS-Resources in NZP-CSI-RS-ResourceSet for corresponding channel measurement, and the k+1 th entry of associated csi-IM-Resource in csi-IM-ResourceSet or the k+1 th entry of associated nzp-CSI-RS-Resources in NZP-CSI-RS-ResourceSet for corresponding interference measurement (when reportQuantity is set to "cri-SINR" in CSI-ReportConfig). When two CSI-RS resources are configured, each resource may include up to 16 CSI-RS ports. When three or more and eight or less CSI-RS resources are configured, each resource may include up to 8 CSI-RS ports.

When the UE is configured with CSI-ReportConfig with a report quantity (higher layer parameter "reportQuantity") set to "ssb-Index-RSRP," the UE may report an SSBRI. Here, SSBRI k (k≥0) may correspond to the k+1 th entry configured by associated csi-SSB-ResourceList in corresponding CSI-SSB-ResourceSet.

When the UE is configured with CSI-ReportConfig with a report quantity (higher layer parameter "reportQuantity") set to "ssb-Index-SINR," the UE may derive an L1-SINR under a condition of a reported SSBRI. Here, SSBRI k (k≥0) may correspond to the configured k+1 th entry of associated csi-SSB-ResouceList in CSI-SSB-ResourceSet for corresponding channel measurement, and the k+1 th entry of associated csi-IM-Resource in csi-IM-ResourceSet or the k+1 th entry of associated nzp-CSI-RS-Resources in NZP-CSI-RS-ResourceSet for corresponding interference measurement.

### (Enhanced Group-based Beam Reporting)

For future radio communication systems (for example, Rel. 17 (or later versions)), beam management-related enhancement for a user terminal (User Equipment (UE)) including a plurality of panels (multi-panel), a plurality of transmission/reception points (multi-Transmission/Reception Point (TRP)), and the like (for example, a beam report suitable for a plurality of TRPs, which may be referred to as enhanced group-based beam reporting) is under study.

groupBasedBeamReporting described above can be reported by one report for one group including a plurality of (for example, two) CRIs/SSBRIs, and thus is suitable for a case where multi-TRP transmission, multi-panel reception, and the like are applied. For example, groupBasedBeamReporting can be used for reporting the best beam of TRP 1 and the best beam of TRP 2 as RSRP#1 and differential RSRP #2, respectively.

In Rel. 15 and 16, a UE configured with group-based beam reporting being enabled can report only one group including two different CRIs/SSBRIs (which may be used interchangeably with beam indices) for each report configuration. Thus, it is assumed that the number of groups capable of being reported by group-based beam reporting is enhanced for Rel. 17.

For example, two channel measurement resource sets (for example, CMR sets) may be configured/triggered as a periodic/semi-persistent/aperiodic resource type. The two channel measurement resource sets (for example, CMR sets) may be, for example, two CSI-SSB-resource sets / two NZP-CSI-RS-resource sets. The UE may be configured to be capable of reporting up to four groups of CRIs/SSBRIs. Note that the number of reportable groups (or the number 1/2/3/4 of candidates) may be configured by a higher layer parameter.

Each group may include a plurality of (for example, two) CRIs/SSBRIs, and the CRIs/SSBRIs of each group may be selected from two respective CSI resource sets for report configuration (for example, report setting). The two CRIs/SSBRIs of each group may mean that the UE can perform simultaneous reception (for example, can perform simultaneous reception using one spatial domain reception filter).

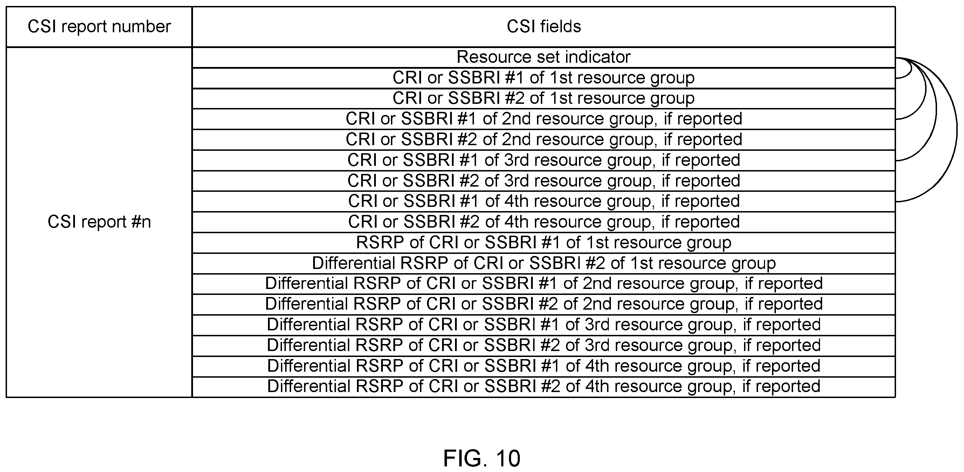

FIG. 10 is a diagram to show an example of a CSI report in a case where the enhanced group-based beam reporting is performed. FIG. 10 shows a mapping order of CSI fields included in one report (for example, n-th CSI report #n) for group-based CSI/RSRP or SSBRI/RSRP reporting.

The CSI report may include up to X (for example, X=4) resource groups. Each group includes a plurality of (for example, two) CRIs/SSBRIs. FIG. 10 shows a case where CRI or SSBRI #1 and CRI or SSBRI #2 are reported as each resource group.

The CSI fields may include a resource set indicator. A value of the resource set indicator may indicate a channel measurement resource set from which CRI or SSBRI #1 of a first resource group is reported. For example, a 1-bit resource set indicator having a value of 0 or 1 may indicate the first or second channel measurement resource set, respectively, from which CRI or SSBRI #1 of the first resource group may be reported. All the remaining resource groups (for example, when there is another resource group to be reported) follow the same mapping order as that of the first resource group. For example, CRIs or SSBRIs #1 of all the remaining resource groups may be reported (or selected) from the channel measurement resource set indicated by the resource set indicator.

In other words, CRI or SSBRI #1 and CRI or SSBRI #2 of each group may be reported (or selected) from a resource set indicated by the resource set indicator and another resource set, respectively. In this manner, in all the resource groups, CRI or SSBRI #1 and CRI or SSBRI #2 may be reported from different channel measurement resource sets.

RSRP corresponding to a beam index (for example, CRI or SSBRI) of each resource group is reported. For example, RSRP of a CRI or SSBRI of a specific group may be reported, and as other RSRP, a difference between the other RSRP and the RSRP of the CRI or SSBRI of the specific group may be reported. The RSRP of the CRI or SSBRI of the specific group may be RSRP of CRI or SSBRI #1 of the first resource group.

The enhanced group-based beam reporting may be configured (or configured to be enabled/activated) by a given higher layer parameter (for example, groupBasedBeamReporting-r17). Alternatively, the enhanced group-based beam reporting may be judged to be enabled when a higher layer parameter related to the number of reported groups (for example, nrofReportedGroups-r17) is configured.

As described above, for Rel. 18 (or later versions), it is studied that simultaneous UL transmission (for example, Simultaneous Transmission across multiple panels (STxMP) or simultaneous multi-panel UL transmission (SiMPUL)) using a plurality of panels is supported for one or more TRPs (for example, multi-TRP).

In Rel-15/16/17 group-based beam reporting, the UE can indicate, by reporting groups of CRIs/SSBRIs, that two CRIs/SSBRIs of each group can be simultaneously received by the UE. In the present disclosure, the reporting may be referred to as DL group-based beam reporting.

For simultaneous multi-panel UL transmission of Rel. 18 (or later versions), the UE is required to report whether the UE can transmit two beams simultaneously. With this, the base station can recognize which beam is to be indicated/used for the simultaneous multi-panel UL transmission. For example, the UE may indicate, using beam group reporting, that two beams (or beam indices) of each group can be simultaneously transmitted by the UE. In the present disclosure, the reporting may be referred to as UL group-based beam reporting. The UL group-based beam reporting may employ the same mechanism as that of the group-based beam reporting supported by Rel. 15/16/17.

A case where the UL group-based beam reporting is performed includes an issue related to how to perform the reporting. For example, the case includes an issue related to how to control a relationship (for example, reporting method) between the UL group-based beam reporting and the DL group-based beam reporting.

More specifically, the case includes an issue related to whether the UL group-based beam reporting is reported together with or separately from the DL group beam reporting. Alternatively, the case includes an issue related to how to configure/enable/activate the UL group-based beam reporting.

The inventors of the present invention focused on a case where UL group-based beam reporting is introduced/supported, studied a method for controlling the UL group-based beam reporting, and came up with the idea of the present embodiment.

Embodiments according to the present disclosure will be described in detail with reference to the drawings as follows. The radio communication methods according to respective embodiments may each be employed individually, or may be employed in combination.

In the present disclosure, "A/B," "at least one of A and B," and "A and B" may be used interchangeably. In the present disclosure, "A/B/C," "at least one of A, B, and C," and "A, B, and C" may be used interchangeably.

In the present disclosure, a cell, a serving cell, a CC, a carrier, a BWP, a DL BWP, a UL BWP, an active DL BWP, an active UL BWP, and a band may be used interchangeably.

In the present disclosure, an index, an ID, an indicator, and a resource ID may be used interchangeably.

In the present disclosure, "support," "control," "controllable," "operate," and "operable" may be used interchangeably.

Note that, in the present disclosure, a panel (reception panel), an Uplink (UL) transmission entity, a TRP, a spatial relation, a control resource set (CORESET), a PDSCH, a codeword, a base station, an antenna port (for example, a demodulation reference signal (DMRS) port), an antenna port group (for example, a DMRS port group), a group (for example, a code division multiplexing (CDM) group, a reference signal group, a CORESET group, or a CORESET pool), a reference signal configuration, a reference signal set configuration, and the like may be used interchangeably.

A panel Identifier (ID) and a panel may be used interchangeably. A TRP ID and a TRP may be used interchangeably.

Note that, in the present disclosure, a group, a set, a cluster, a panel, a group related to a (reported) beam, and the like may be used interchangeably.

In the following embodiments, a beam index / beam ID may be used interchangeably with a CRI/SSBRI, for example. RSRP/SINR may be used interchangeably with any beam-related measurement result.

A CSI-RS-related name may be used interchangeably with a corresponding SSB-related name. For example, a CSI-RS resource may be used interchangeably with an SSB resource. In other words, a CSI-RS and a CRI may be used interchangeably with a CSI-RS/SSB and a CRI/SSBRI, respectively.

In the present disclosure, a "reception panel" may correspond to at least one of an RS group, a TRP index, a CORESET pool index, an RS group configured for group-based beam reporting, a TCI state (or TCI) group, a QCL assumption (or QCL) group, and a beam group.

In the present disclosure, "at the same location" may be used interchangeably with "at the same i-th," "corresponding to the same TRP," and the like. Note that, in the present disclosure, "i th" may mean being included i th in a certain CSI report, or may mean being included i th in a certain group of a certain CSI report.

In the present disclosure, a "set," a "CMR set," a "CMR resource set," and the like may be used interchangeably. In the present disclosure, an "SSBRI/CRI" and a "CMR index" may be used interchangeably. In the present disclosure, "RSRP/SINR" and "L1-RSRP/L1-SINR/L3-RSRP/L3-SINR" may be used interchangeably. Note that L3 may mean Layer 3.

### (Radio Communication Method)

A UE may perform, in a CSI report, group-based beam reporting related to UL transmission (also referred to hereinafter as UL group-based beam reporting). The UL group-based beam reporting may be performed in CSI report #n (for example, one reporting instance) common to DL group-based beam reporting, or may be performed in a CSI report different from that of the DL group-based beam reporting.

For example, the UE may apply at least one of Options 1 to 3 below to the UL group-based beam reporting.

### [Option 1]

When a given higher layer parameter is configured, and simultaneous UL transmission (for example, STxMP) is configured (for example, configured to be enabled), the UE performs control to report one or more given beam pairs. The given beam pair may be a pair of two beams capable of being simultaneously received by the UE and being simultaneously transmitted by the UE.

The given higher layer parameter may be, for example, a higher layer parameter for configuring enabling (for example, enabled)/disabling of Rel-15/16/17 group-based beam reporting, or may be a higher layer parameter for enabling application of Option 1 (for example, a new higher layer parameter). In other words, when both configuration of the group-based beam reporting and configuration of the simultaneous UL transmission are configured, the UE may perform DL group-based beam reporting and UL group-based beam reporting in one CSI report.

When UL group-based beam reporting and DL group-based beam reporting are performed in the same CSI report, the UL group-based beam reporting and the DL group-based beam reporting may be performed using the same field or different fields.

### [Option 2]

The UL group-based beam reporting may be supported separately from DL group-based beam reporting (for example, Rel-17 group beam reporting). When a given higher layer parameter is configured, the UE may perform control to report one or more beam pairs. The beam pair(s) may be pair(s) of two beams capable of being simultaneously transmitted by the UE.

The given higher layer parameter may be, for example, a higher layer parameter for configuring enabling (for example, enabled)/disabling of group-based beam reporting of Rel. 15/16/17, or may be a higher layer parameter for enabling application of Option 1.

### [Option 3]

The same UE capability value sets may be supported using Rel-17 UE capability value set report framework (for example, Rel-17 capability value set report framework). In this case, two beams with different UE capability value set indices can be simultaneously transmitted by the UE.

The UE may receive information related to a CSI resource set including one or more (for example, a plurality of) CRIs/SSBRIs. The UE may perform measurement of a CSI-RS/SSB resource corresponding to the CRI/SSBRI included in the CSI resource set, and may report a result of the measurement (for example, CRI/SSBRI) as a group-based beam report.

The UE receives at least one of information related to a CSI resource set (or CRI/SSBRI) used for DL group-based beam reporting and information related to a CSI resource set (or CRI/SSBRI) used for UL group-based beam reporting. The information may be configured for the UE by a given higher layer parameter.

The CSI resource set (or CRI/SSBRI) used for the UL group-based beam reporting and the CSI resource set (or CRI/SSBRI) used for the DL group-based beam reporting may be configured in common. Alternatively, the CSI resource set (or CRI/SSBRI) used for the UL group-based beam reporting may be configured separately from the CSI resource set (or CRI/SSBRI) used for the DL group-based beam reporting.

### <First Embodiment>

In a first embodiment, an example of the group-based beam reporting related to UL transmission will be described. The first embodiment may be suitably applied to a case where Option 1 described above is applied. Of course, the first embodiment is not limited to this.

When a given condition is satisfied, a UE may perform UL group-based beam reporting and DL group-based beam reporting in common. The given condition may be a case where configuration/indication is performed using one or more higher layer parameters / MAC CEs / DCIs. For example, when a first configuration for configuring group-based beam reporting being enabled (for example, a first higher layer parameter) and a second configuration for configuring simultaneous UL transmission being enabled (for example, a second higher layer parameter / DCI) are configured, the UE may include, in a beam report, a beam pair capable of being simultaneously received and capable of being simultaneously transmitted (for example, a beam pair capable of being simultaneously received + simultaneously transmitted).

For example, the UE may report common beam group(s) (for example, common group(s) of beams) for a DL group-based beam report and a UL group-based beam report. In the present disclosure, a group, a beam group, and a resource group may be used interchangeably.

For each group, the UE can simultaneously receive beam groups (plurality of beam indices included in the same group) (or supports the simultaneous reception) and can simultaneously transmit the beam groups (plurality of beam indices included in the same group) (or supports the simultaneous transmission).

The UE may perform the UL group-based beam reporting using at least one of Option 1-1 to Option 1-4 below.

### {Option 1-1}

The UE may report a plurality of (for example, two) CRIs/SSBRIs (one group) in one reporting instance (for example, single reporting instance). The UE may be able to simultaneously receive two CRI-RS/SSB resources (or may support the reception) and may be able to simultaneously transmit two CSI-RS/SSB resources (or may support the transmission).

The two CSI-RS/SSB resources capable of being simultaneously transmitted by the UE may mean that the UE can simultaneously transmit two UL transmissions with spatial relations associated with the two CSI-RS/SSB resources (or supports the simultaneous transmission). In other words, the UE may support simultaneous transmission of two UL transmissions including spatial relations (or TCI states/ quasi co-location / UL resources) associated with two respective CSI-RS/SSB resources included in the same group.

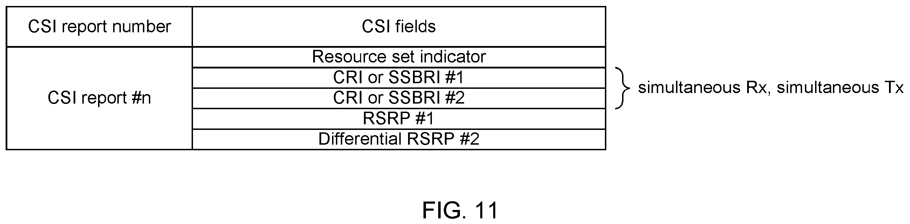

FIG. 11 is a diagram to show an example of a CSI report in a case where the DL group-based beam reporting and the UL group-based beam reporting are performed in common. FIG. 11 shows a mapping order of CSI fields included in one report (for example, n-th CSI report #n) for group-based CSI-RSRP or SSBRI/RSRP reporting.

Note that, for the CSI report described in the following description, the order of fields may be appropriately changed. For the CSI report described in the following description, RSRP may be used interchangeably with an SINR. For the CSI report described in the following description, when one CSI-RS resource set (for example, a single CSI-RS resource set) is configured, a resource set indicator field may not be included.

FIG. 11 shows a case where CRI/SSBRI #1 and CRI/SSBRI #2 (one group) are reported as a group-based beam report. This case may mean that the UE can simultaneously receive CRI/SSBRI #1 and CRI/SSBRI #2 included in the same group and can simultaneously transmit two UL transmissions associated with CRI/SSBR #1 and CRI/SSBRI #2 included in the same group. In the present disclosure, a "CRI/SSBRI" may be used interchangeably with a CSI-RS/SSB resource.

### {Option 1-2}

The UE may report a plurality of (for example, two) CRIs/SSBRIs of N groups in one reporting instance (for example, single reporting instance). In this case, the UE may be able to simultaneously receive two CSI-RS/SSB resources of each group (or may support the reception) and may be able to simultaneously transmit two CSI-RS/SSB resources of each group (or may support the transmission).

The number of groups (for example, N) may be predefined in a specification, or may be configured by a higher layer parameter related to the number of groups (for example, nrofReportedRSgroup). Note that Option 1-1 may be applied when N = 1.

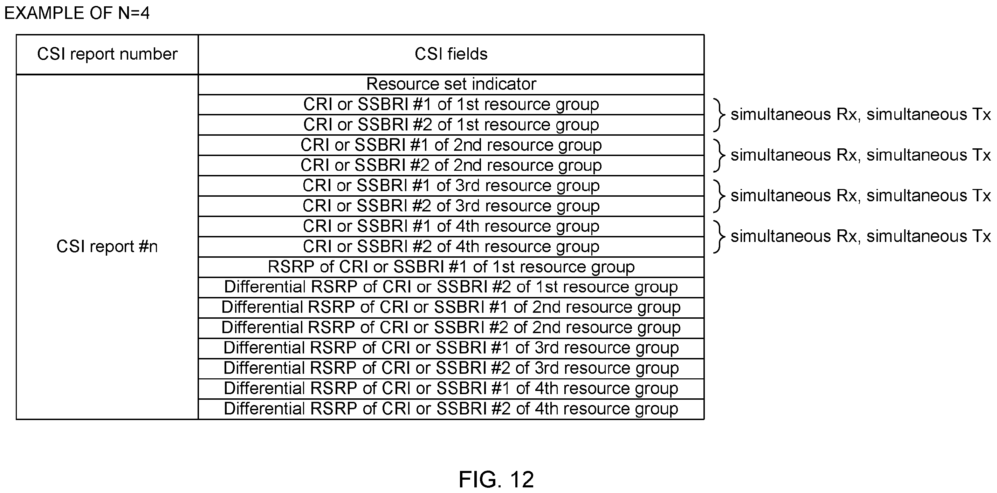

FIG. 12 is a diagram to show an example of a CSI report in a case where the DL group-based beam reporting and the UL group-based beam reporting are performed in common. FIG. 12 shows a case where CRIs/SSBRIs (here, CRI/SSBRI #1 and CRI/SSBRI #2) of N (here, N = 4) resource groups are reported.

This case may mean that the UE can simultaneously receive CRI/SSBRI #1 and CRI/SSBRI #2 included in the same group and can simultaneously transmit two UL transmissions associated with CRI/SSBR #1 and CRI/SSBRI #2 included in the same group.

### {Option 1-3}

The UE may report a plurality of (for example, two) CRIs/SSBRIs of N groups in one reporting instance (for example, single reporting instance). In this case, the UE may be able to simultaneously receive two CSI-RS/SSB resources of each group (for example, for each N groups) and may be able to simultaneously transmit, for M groups of the N groups (N≥M or N>M), two CSI-RS/SSB resources of each group.

The number of groups (for example, at least one of N and M) may be predefined in a specification, or may be configured by a higher layer parameter related to the number of groups (for example, nrofReportedRSgroup). The CSI field may include information indicating whether each group is a beam pair capable of being simultaneously transmitted (or whether a UL group-based beam report is included).

For example, the CSI field may be provided with X-bit indication fields (for example, X = 1 or 2) corresponding to the respective resource groups, and the indication fields (for example, 1 bit) may be used to indicate whether a beam pair of each resource group is a pair capable of being simultaneously received or a pair capable of being simultaneously received + simultaneously transmitted. Alternatively, the indication fields corresponding to the respective resource groups may be used to indicate whether a beam pair of each resource group is a pair capable of being simultaneously received, a pair capable of being simultaneously transmitted, or a pair capable of being simultaneously received + simultaneously transmitted.

The indication fields may be configured in common for a plurality of resource groups. In this case, in the plurality of resource groups, whether a beam pair of each resource group is a pair capable of being simultaneously received or a pair capable of being simultaneously received + simultaneously transmitted may be configured in common.

### <<Option 1-3-1>>

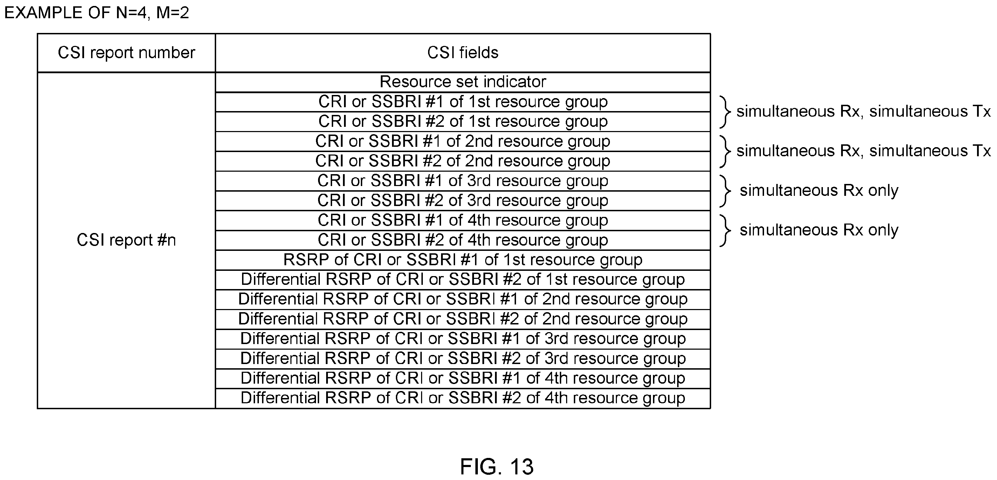

For the first/last M groups of the N groups, the UE may be able to simultaneously transmit CSI-RS/SSB resources of each group (see FIG. 13). Alternatively, an indication field provided for the CSI field may indicate M.

FIG. 13 shows a case where for the first two groups of the four groups (N=4, M=2), UL group-based beam reporting and DL group-based beam reporting are collectively performed. In this case, the UE may indicate, for the first two groups of the four groups, that CSI-RS/SSB resources of each group can be simultaneously transmitted by the UE. The groups other than those groups may correspond only to DL group-based beam reporting.

Option 1-3-1 may be default operation / default configuration.

### <<Option 1-3-2>>

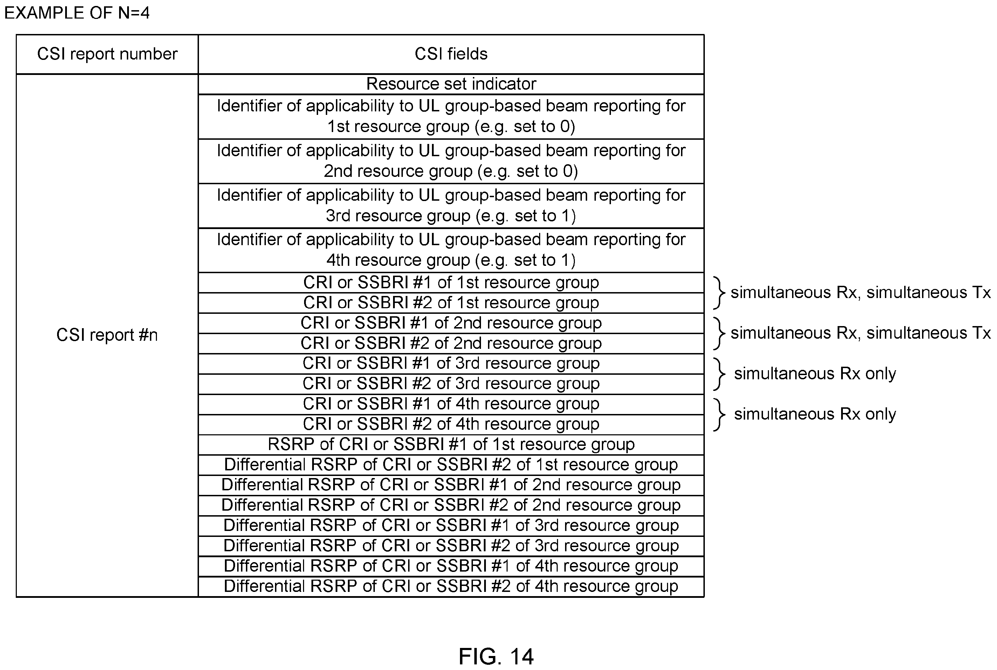

For each group, whether the UE can simultaneously transmit two CSI-RS/SSB resources of the group may be indicated using beam reporting (for example, via a 1-bit indication field for each group) (see FIG. 14).

FIG. 14 shows a case of provision of a field indicating a group of the four groups for which UL group-based beam reporting and DL group-based beam reporting are collectively performed or a group of the four groups for which the UE can simultaneously transmit two CSI-RS/SSB resources. FIG. 14 shows a case where respective indicators (here, 1 bit) indicating application of UL group-based beam reportings for the respective groups (here, 1 to 4) are provided. Note that FIG. 14 shows a case where DL group-based beam reporting is performed for each group.

When an identifier indicating applicability to UL group-based beam reporting for a resource group (for example, Identifier of applicability to UL group-based beam reporting for resource group) is set to 0, it may be indicated that two CSI-RS/SSB resources in the resource group are simultaneously received and simultaneously transmitted by the UE. Otherwise (when the identifier is set to 1), it may only be indicated that the UE simultaneously receives two CSI-RS/SSB resources in the resource group.

FIG. 14 shows a case where the identifiers for first and second resource groups and the identifiers for third and fourth resource groups are set to 0 and 1, respectively. With this, it is possible to flexibly configure whether UL group-based beam reporting and DL group-based beam reporting are collectively performed for each resource group. Note that switching between the indication by the identifier being 0 and the indication by the identifier being 1 may be performed.

### {Option 1-4}

The UE may report a plurality of (for example, two) CRIs/SSBRIs of N groups in one reporting instance (for example, single reporting instance). In this case, the UE may be able to simultaneously transmit two CSI-RS/SSB resources of each group (for example, for each N groups) and may be able to simultaneously receive, for M groups of the N groups (N≥M or N>M), two CSI-RS/SSB resources of each group.

The number of groups (for example, at least one of N and M) may be predefined in a specification, or may be configured by a higher layer parameter related to the number of groups (for example, nrofReportedRSgroup).

### <<Option 1-4-1>>

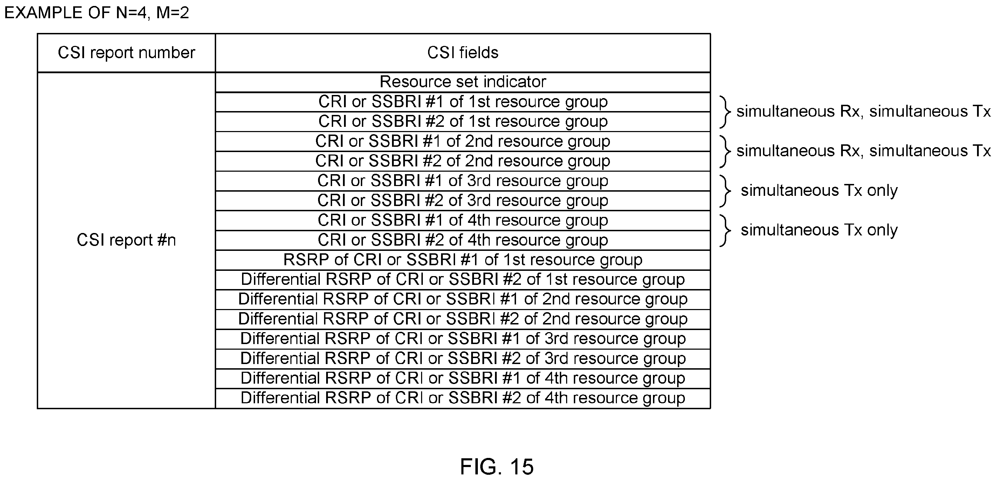

For the first/last M groups of the N groups, the UE may be able to simultaneously receive CSI-RS/SSB resources of each group (see FIG. 15).

FIG. 15 shows a case of provision of a field indicating a group of the four groups for which UL group-based beam reporting and DL group-based beam reporting are collectively performed or a group of the four groups for which the UE can simultaneously receive two CSI-RS/SSB resources. FIG. 15 shows a case where respective indicators (here, 1 bit) indicating application of DL group-based beam reportings for the respective groups (here, 1 to 4) are provided. Note that FIG. 15 shows a case where UL group-based beam reporting is performed for each group.

Option 1-4-1 may be default operation / default configuration.

### <<Option 1-4-2>>

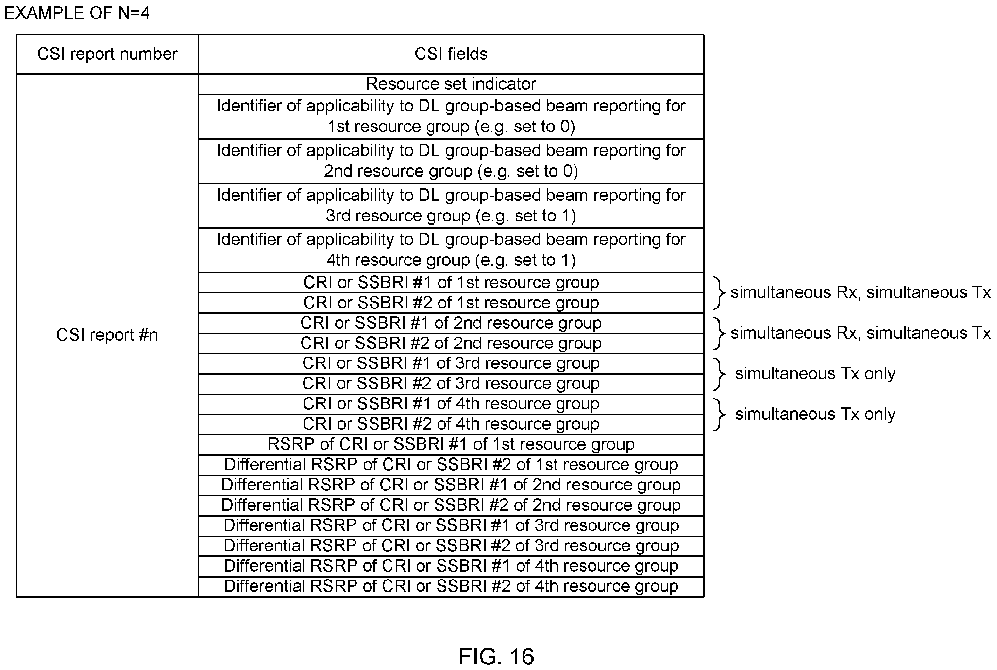

For each group, whether the UE can simultaneously transmit two CSI-RS/SSB resources of the group may be indicated using beam reporting (for example, via 1 bit for each group) (see FIG. 16).

FIG. 16 shows a case of provision of an indication field indicating a group of the four groups for which UL group-based beam reporting and DL group-based beam reporting are collectively performed or a group of the four groups for which the UE can simultaneously receive two CSI-RS/SSB resources. FIG. 16 shows a case where respective indicators (here, 1 bit) indicating application of DL group-based beam reportings for the respective groups (here, 1 to 4) are provided. Note that FIG. 16 shows a case where UL group-based beam reporting is performed for each group.

When an identifier indicating applicability to DL group-based beam reporting for a resource group (for example, Identifier of applicability to DL group-based beam reporting for resource group) is set to 0, it may be indicated that two CSI-RS/SSB resources in the resource group are simultaneously received and simultaneously transmitted by the UE. Otherwise (when the identifier is set to 1), it may only be indicated that the UE simultaneously transmits two CSI-RS/SSB resources in the resource group.

FIG. 16 shows a case where the identifiers for first and second resource groups and the identifiers for third and fourth resource groups are set to 0 and 1, respectively. With this, it is possible to flexibly configure whether UL group-based beam reporting and DL group-based beam reporting are collectively performed for each resource group. Note that switching between the indication by the identifier being 0 and the indication by the identifier being 1 may be performed.

At least one of Alt. 1-1 to Alt. 1-2 below may be applied to Option 1-1 to Option 1-4 described above.

### {Alt. 1-1}

When one CSI resource set is configured, two CSI-RS/SSB resources of each group may be selected from the one CSI resource set.

### {Alt. 1-2}

When two CSI resource sets are configured, two CSI-RS/SSB resources of each group may be selected from the two respective CSI resource sets.

In this case, the CSI report may include a resource set indicator field, and the resource set indicator may indicate the same meaning as that of a Rel-17 group-based beam report. For example, a value of the resource set indicator may indicate a channel measurement resource set from which CRI or SSBRI #1 of a first resource group is reported. For example, a 1-bit resource set indicator having a value of 0 or 1 may indicate the first or second channel measurement resource set, respectively, from which CRI or SSBRI #1 of the first resource group may be reported. All the remaining resource groups (for example, when there is another resource group to be reported) follow the same mapping order as that of the first resource group. For example, CRIs or SSBRIs #1 of all the remaining resource groups may be reported (or selected) from the channel measurement resource set indicated by the resource set indicator.

### {Variation}

A CSI-RS/SSB resource for the UL group-based beam reporting may be different from a CSI-RS/SSB resource for the DL group-based beam reporting. For example, a UL resource may be a subset of DL resources.

For example, when X CSI-RS/SSB resources are configured in a CSI resource set, all the resources and some resources may be used for DL group-based beam reporting and UL group-based beam reporting, respectively. The some resources may be the first/last Y resources. Y may be defined in a specification, or may be configured for the UE by a higher layer parameter or the like.

Alternatively, whether each CSI-RS/SSB resource is used for both DL group-based beam reporting and UL group-based beam reporting, only DL group-based beam reporting, or only UL group-based beam reporting may be explicitly configured/indicated. Note that configuration/indication of two of the "use for both DL and UL group-based beam reportings," the "use for only DL group-based beam reporting," and the "use for only UL group-based beam reporting" may be supported.

For the DL group-based beam reporting, a maximum number of CSI-RS/SSB resources in a CSI resource set may be defined, or may be configured by a higher layer parameter or the like. For example, the maximum number may be the same as or greater than or equal to that of Rel. 17. For example, the maximum number may be 64 or 128. The maximum number may be determined in consideration of a UE capability.

For the UL group-based beam reporting, a maximum number of CSI-RS/SSB resources in a CSI resource set may be defined, or may be configured by a higher layer parameter or the like. For example, the maximum number may be the same as or less than or equal to the maximum number for the DL group-based beam reporting. For example, the maximum number may be 32 or 64. The maximum number may be determined in consideration of a UE capability.

For both of the DL group-based beam reporting and the UL group-based beam reporting, a maximum number of CSI-RS/SSB resources in a CSI resource set may be defined, or may be configured by a higher layer parameter or the like.

### <Second Embodiment>

In a second embodiment, another example of the group-based beam reporting related to UL transmission will be described. The second embodiment may be suitably applied to a case where Option 1 described above is applied. Of course, the second embodiment is not limited to this.

A UE may perform, in one CSI report, UL group-based beam reporting and DL group-based beam reporting when a given condition is satisfied. The given condition may be a case where configuration/indication is performed using one or more higher layer parameters / MAC CEs / DCIs. For example, when a first configuration for configuring group-based beam reporting being enabled (for example, a first higher layer parameter) and a second configuration for configuring simultaneous UL transmission being enabled (for example, a second higher layer parameter / DCI) are configured, the UE may report a beam pair capable of being simultaneously received and a beam pair capable of being simultaneously transmitted, using different fields for beam reporting.

In a single reporting instance, the UE may report separate beam groups for the DL group-based beam reporting and the UL group-based beam reporting.

The UE can simultaneously receive, for groups corresponding to DL, beam groups (plurality of beam indices included in the same group) (or supports the simultaneous reception) and can simultaneously transmit, for groups corresponding to UL, beam groups (plurality of beam indices included in the same group) (or supports the simultaneous transmission).

A CSI field may include information indicating whether each group corresponds to DL group-based beam reporting (or a beam pair capable of being simultaneously received) or UL group-based beam reporting (or a beam pair capable of being simultaneously transmitted).

The UE may perform the UL group-based beam reporting using at least one of Option 2-1 to Option 2-2 below.

### {Option 2-1}

The UE may report a plurality of (for example, two) CRIs/SSBRIs (one or more groups) in one reporting instance (for example, single reporting instance). This case may mean that the UE can simultaneously receive two CSI-RS/SSB resources (or supports the reception).

The UE may perform the UL group-based beam reporting using a CRI/SSBRI or a resource group different from at least one of a CRI/SSBRI and a resource group for the DL group-based beam reporting. For example, the UE may use at least one of Options 2-1-1 to Option 2-1-2 below.

### <<Option 2-1-1>>

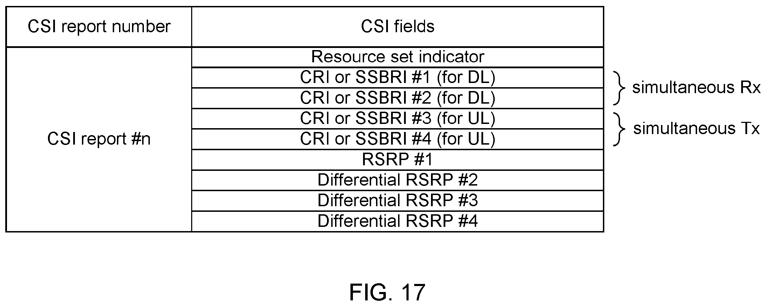

The UE may report one or more (for example, two) other CRIs/SSBRIs different from DL group-based CRIs/SSBRIs. This case may mean that the other two CRI-RS/SSB resources can be simultaneously transmitted (or the transmission is supported) (see FIG. 17).

FIG. 17 is a diagram to show an example of a CSI report in a case where the DL group-based beam reporting and the UL group-based beam reporting are performed separately (or using different CRIs/SSBRIs or using different fields). FIG. 17 shows a mapping order of CSI fields included in one report (for example, n-th CSI report #n) for group-based CSI-RSRP or SSBRI/RSRP reporting.

FIG. 17 shows a case where CRI/SSBRI #1 and CRI/SSBRI #2 are reported for the DL group-based beam reporting and where CRI/SSBRI #3 and CRI/SSBRI #4 are reported for the UL group-based beam reporting. Note that CRIs/SSBRIs #1 to #4 may correspond to the same resource group (one group). Note that the CRIs/SSBRIs corresponding to the UL group-based beam reporting may be indicated using another field (for example, an indication field).

### <<Option 2-1-2>>

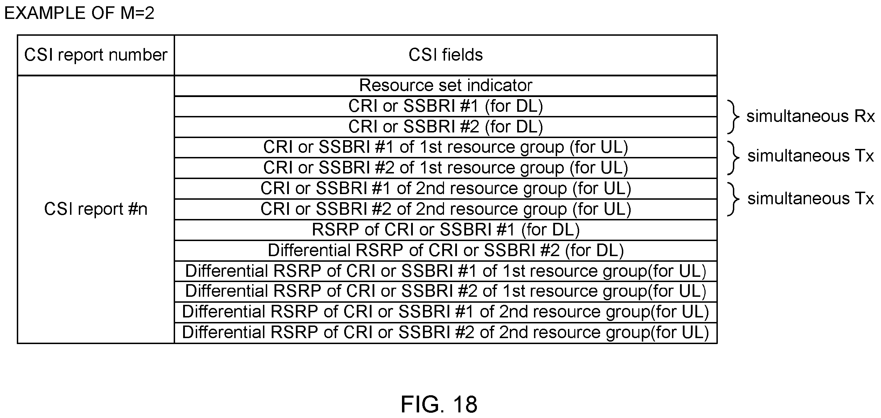

The UE may report M other resource groups different from a DL group-based resource group. This case may mean that two CRI-RS/SSB resources for each of the M other resource groups can be simultaneously transmitted (or the transmission is supported) (see FIG. 18).

FIG. 18 is a diagram to show an example of a CSI report in a case where the DL group-based beam reporting and the UL group-based beam reporting are performed separately (or using different resource groups). FIG. 18 shows a case where CRI/SSBRI #1 and CRI/SSBRI #2 of one resource group are reported for the DL group-based beam reporting and where CRI/SSBRI #1 and CRI/SSBRI #2 of a first resource group and CRI/SSBRI #1 and CRI/SSBRI #2 of a second resource group are reported for the UL group-based beam reporting.

The number of UL group-based resource groups (for example, M) may be predefined in a specification, or may be configured by a higher layer parameter related to the number of groups (for example, nrofReportedRSgroup). Alternatively, the CSI field may be provided with an indication field indicating M.

### {Option 2-2}

The UE may report a plurality of (for example, two) CRIs/SSBRIs for N groups in one reporting instance (for example, single reporting instance). This case may mean that the UE can simultaneously receive two CSI-RS/SSB resources of each group (or supports the reception).

The number of groups (for example, N) may be predefined in a specification, or may be configured by a higher layer parameter related to the number of groups (for example, nrofReportedRSgroup). Note that Option 2-1 may be applied when N = 1.

The UE may perform the UL group-based beam reporting using a CRI/SSBRI or a resource group different from at least one of a CRI/SSBRI and a resource group for the DL group-based beam reporting. The CSI field may include information indicating which of DL group-based beam reporting (or a beam pair capable of being simultaneously received) or UL group-based beam reporting (or a beam pair capable of being simultaneously transmitted) each group corresponds to.

For example, the CSI field may be provided with X-bit indication fields (for example, X = 1 or 2) corresponding to the respective resource groups, and the indication fields (for example, 1 bit) may be used to indicate whether a beam pair of each resource group is a pair capable of being simultaneously received or a pair capable of being simultaneously transmitted.

Alternatively, the indication fields corresponding to the respective resource groups may be used to indicate whether a beam pair of each resource group is a pair capable of being simultaneously received, a pair capable of being simultaneously transmitted, or a pair capable of being simultaneously received + simultaneously transmitted. In this case, a certain beam pair may correspond to DL group-based and UL group-based reportings, a certain beam pair may correspond to DL group-based reporting, and a certain beam pair may correspond to UL group-based reporting.

For example, the UE may use at least one of Options 2-2-1 to Option 2-2-2 below.

### <<Option 2-2-1>>

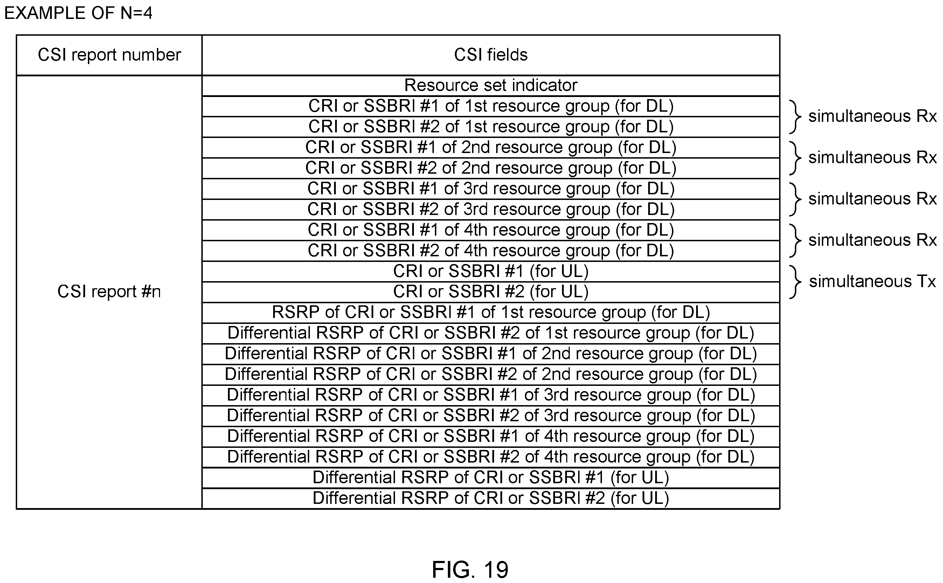

The UE may report one or more (for example, two) other CRIs/SSBRIs different from DL group-based CRIs/SSBRIs. This case may mean that the other two CRI-RS/SSB resources can be simultaneously transmitted (or the transmission is supported) (see FIG. 19).

### <<Option 2-2-2>>

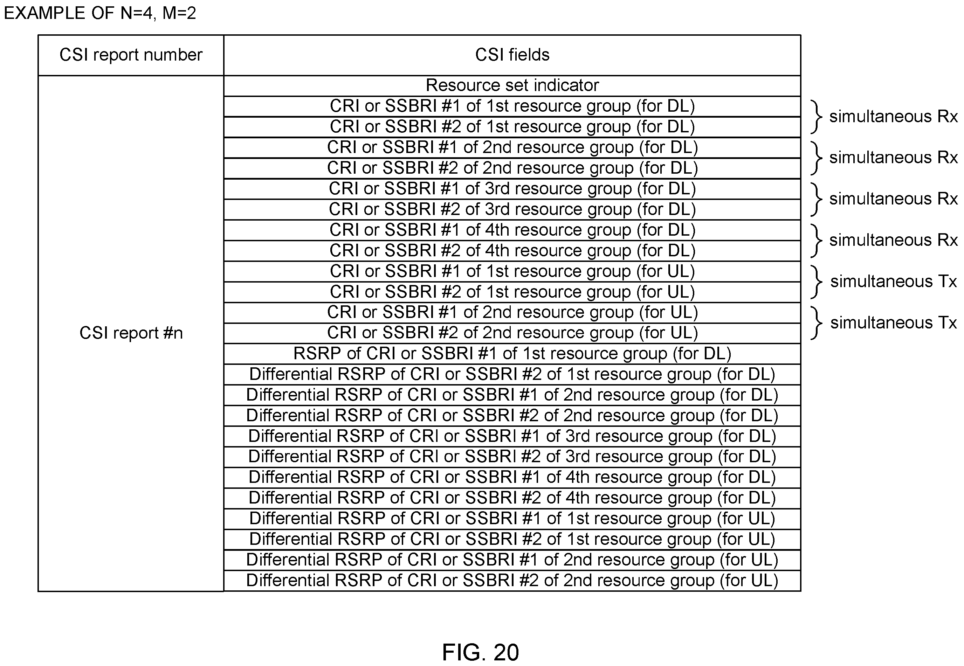

The UE may report M other resource groups different from a DL group-based resource group. This case may mean that two CRI-RS/SSB resources for each of the M other resource groups can be simultaneously transmitted (or the transmission is supported) (see FIG. 20).

The number of groups (for example, N, M) may be predefined in a specification, or may be configured by a higher layer parameter related to the number of groups (for example, nrofReportedRSgroup). Alternatively, indication information indicating the number of resource groups (for example, M) corresponding to the UL group-based beam reporting may be included. Note that Option 2-2-1 may be applied when M = 1. The number N of DL group-based resource groups and the number M of UL group-based resource groups may be separately configured. Alternatively, N may be equal to M.

FIG. 20 is a diagram to show an example of a CSI report in a case where the DL group-based beam reporting and the UL group-based beam reporting are performed separately (or using different resource groups). FIG. 20 shows a case where CRI/SSBRI #1 and CRI/SSBRI #2 of first to fourth resource groups are reported for the DL group-based beam reporting and where CRI/SSBRI #1 and CRI/SSBRI #2 of a first resource group and CRI/SSBRI #1 and CRI/SSBRI #2 of a second resource group are reported for the UL group-based beam reporting.

At least one of Alt. 2-1 to Alt. 2-2 below may be applied to Option 2-1 to Option 2-2 described above.

### {Alt. 2-1}

When one CSI resource set is configured, two CSI-RS/SSB resources of each group may be selected from the one CSI resource set.

### {Alt. 2-2}

When two CSI resource sets are configured, two CSI-RS/SSB resources of each group may be selected from the two respective CSI resource sets.

In this case, the two CSI resource sets may be configured in common for DL beam reporting and UL beam reporting.

Alternatively, two CSI resource sets may be separately configured for each of the DL beam reporting and the UL beam reporting. For example, two CSI resource sets may be configured for the DL beam reporting, and other two CSI resource sets may be configured for the UL beam reporting.

In this case, the CSI report may include a resource set indicator field, and the resource set indicator may indicate the same meaning as that of a Rel-17 group-based beam report. For example, a value of the resource set indicator may indicate a channel measurement resource set from which CRI or SSBRI #1 of a first resource group is reported. For example, a 1-bit resource set indicator having a value of 0 or 1 may indicate the first or second channel measurement resource set, respectively, from which CRI or SSBRI #1 of the first resource group may be reported. All the remaining resource groups (for example, when there is another resource group to be reported) follow the same mapping order as that of the first resource group. For example, CRIs or SSBRIs #1 of all the remaining resource groups may be reported (or selected) from the channel measurement resource set indicated by the resource set indicator.

Alternatively, the CSI report may include two respective resource set indicator fields corresponding to the DL beam reporting and the UL beam reporting.

### {Variation}

A CSI-RS/SSB resource for the UL group-based beam reporting may be different from a CSI-RS/SSB resource for the DL group-based beam reporting. For example, a UL resource may be a subset of DL resources.

For example, when X CSI-RS/SSB resources are configured in a CSI resource set, all the resources and some resources may be used for DL group-based beam reporting and UL group-based beam reporting, respectively. The some resources may be the first/last Y resources. Y may be defined in a specification, or may be configured for the UE by a higher layer parameter or the like.

Alternatively, whether each CSI-RS/SSB resource is used for both DL group-based beam reporting and UL group-based beam reporting, only DL group-based beam reporting, or only UL group-based beam reporting may be explicitly configured/indicated. Note that configuration/indication of two of the "use for both DL and UL group-based beam reportings," the "use for only DL group-based beam reporting," and the "use for only UL group-based beam reporting" may be supported.

For the DL group-based beam reporting, a maximum number of CSI-RS/SSB resources in a CSI resource set may be defined, or may be configured by a higher layer parameter or the like. For example, the maximum number may be the same as or greater than or equal to that of Rel. 17. For example, the maximum number may be 64 or 128. The maximum number may be determined in consideration of a UE capability.

For the UL group-based beam reporting, a maximum number of CSI-RS/SSB resources in a CSI resource set may be defined, or may be configured by a higher layer parameter or the like. For example, the maximum number may be the same as or less than or equal to the maximum number for the DL group-based beam reporting. For example, the maximum number may be 32 or 64. The maximum number may be determined in consideration of a UE capability.

For both of the DL group-based beam reporting and the UL group-based beam reporting, a maximum number of CSI-RS/SSB resources in a CSI resource set may be defined, or may be configured by a higher layer parameter or the like. The maximum number may be determined in consideration of a UE capability.

### <Third Embodiment>

In a third embodiment, another example of the group-based beam reporting related to UL transmission will be described. The third embodiment may be suitably applied to a case where Option 2 described above is applied. Of course, the third embodiment is not limited to this.

DL group-based beam reporting and UL group-based beam reporting may be reported in separate reporting instances. In a single reporting instance, the UE may perform control to perform only the DL group-based beam reporting or only the UL group-based beam reporting.

The UE may perform the DL group-based beam reporting using a method for existing systems (for example, Rel. 15/16/17).

The UE may perform the DL group-based beam reporting using at least one of Option 3-1 to Option 3-2 below.

### {Option 3-1}

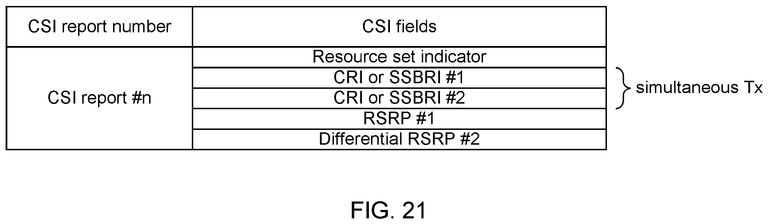

The UE may report two CRIs/SSBRIs as the UL group-based beam reporting. This case may mean that the UE can simultaneously transmit two CRI-RS/SSB resources (or supports the transmission) (see FIG. 21).

FIG. 21 is a diagram to show an example of a CSI report in a case where the UL group-based beam reporting is performed. FIG. 21 shows a mapping order of CSI fields included in one report (for example, n-th CSI report #n) for group-based CSI-RSRP or SSBRI/RSRP reporting.

FIG. 21 shows a case where CRI/SSBRI #1 and CRI/SSBRI #2 are reported for the UL group-based beam reporting. Note that CRIs/SSBRIs #1 to #2 may correspond to the same resource group (one group).

### {Option 3-2}

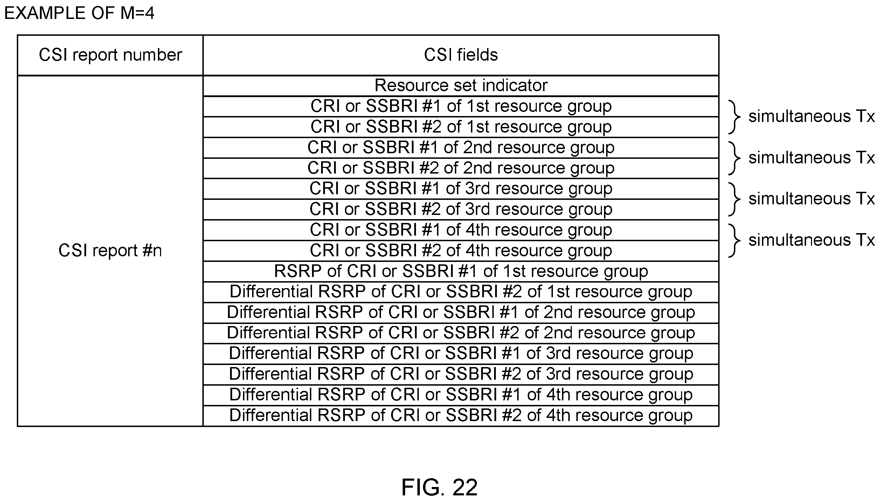

The UE may report two CRIs/SSBRIs for each of M groups. This case may mean that the UE can simultaneously transmit two CRI-RS/SSB resources (or supports the transmission) in each group (see FIG. 22).

FIG. 22 shows a case where for the UL group-based beam reporting, CRI/SSBRI #1 and CRI/SSBRI #2 are reported for each of first to fourth resource groups (here, M = 4).

The number of groups (for example, M) may be predefined in a specification, or may be configured by a higher layer parameter related to the number of groups (for example, nrofReportedRSgroup). Note that Option 3-1 may be applied when M = 1. The number N of DL group-based resource groups and the number M of UL group-based resource groups may be separately configured. Alternatively, N may be equal to M.

At least one of Alt. 3-1 to Alt. 3-2 below may be applied to Option 3-1 to Option 3-2 described above.

### {Alt. 3-1}

When one CSI resource set is configured, two CSI-RS/SSB resources of each group may be selected from the one CSI resource set.

### {Alt. 3-2}

When two CSI resource sets are configured, two CSI-RS/SSB resources of each group may be selected from the two respective CSI resource sets.

In this case, the two CSI resource sets may be configured in common for DL beam reporting and UL beam reporting.

Alternatively, two CSI resource sets may be separately configured for each of the DL beam reporting and the UL beam reporting. For example, two CSI resource sets may be configured for the DL beam reporting, and other two CSI resource sets may be configured for the UL beam reporting.

In this case, the CSI report may include a resource set indicator field, and the resource set indicator may indicate the same meaning as that of a Rel-17 group-based beam report. For example, a value of the resource set indicator may indicate a channel measurement resource set from which CRI or SSBRI #1 of a first resource group is reported. For example, a 1-bit resource set indicator having a value of 0 or 1 may indicate the first or second channel measurement resource set, respectively, from which CRI or SSBRI #1 of the first resource group may be reported. All the remaining resource groups (for example, when there is another resource group to be reported) follow the same mapping order as that of the first resource group. For example, CRIs or SSBRIs #1 of all the remaining resource groups may be reported (or selected) from the channel measurement resource set indicated by the resource set indicator.

### {Variation}

For the UL group-based beam reporting, a maximum number of CSI-RS/SSB resources in a CSI resource set may be defined, or may be configured by a higher layer parameter or the like. For example, the maximum number may be the same as or less than or equal to the maximum number for the DL group-based beam reporting. For example, the maximum number may be 32 or 64. The maximum number may be determined in consideration of a UE capability.

A plurality of configurations from among the first embodiment (at least one of Option 1-1 to Option 1-4), the second embodiment (at least one of Option 2-1 to Option 2-2), and the third embodiment (at least one of Option 3-1 to Option 3-2) may be supported. In this case, which option is to be applied may be determined based on at least one of a higher layer parameter and a UE capability configured for the UE from a base station.

The first to third embodiments may also be applied to a case where joint DL/UL TCI (or unified TCI) for applying a common TCI state to a DL channel/signal and a UL channel/signal is supported. In this case, appropriate common/identical CSI resource set and common/identical beam reported for DL/UL allows the base station to appropriately use the joint DL/UL TCI. For separate DL/UL TCIs or separate panels for DL/UL, separate/different CSI resource sets and separate/different beam reportings for DL and UL are appropriate.

### <Fourth Embodiment>

In a fourth embodiment, configuration (or enabling/disabling) of UL group-based beam reporting / DL group-based beam reporting will be described.

A UE may judge the configuration (or enabling/disabling) of the UL group-based beam reporting / DL group-based beam reporting, based on a given condition / higher layer parameter.

For example, when the third embodiment is supported (for example, the DL group-based beam reporting and the UL group-based beam reporting are performed in separate CSI reporting instances), the configuration (or enabling/disabling) of the UL group-based beam reporting / DL group-based beam reporting may be separately performed.

For example, the DL group-based beam reporting may be enabled by a higher layer parameter for existing systems (for example, groupBasedBeamReporting or groupBasedBeamReporting-r17). On the other hand, the UL group-based beam reporting may be enabled by a new higher layer parameter (for example,
ULgroupBasedBeamReporting).

When the new higher layer parameter is enabled for CSI report configuration (for example, CSI-report config), the third embodiment may be applied to the UL group-based beam reporting.

When the first embodiment (at least one of Option 1-1 to Option 1-4) / second embodiment (at least one of Option 2-1 to Option 2-2) is supported (for example, when the DL group-based beam reporting and the UL group-based beam reporting are performed in one CSI reporting instance), at least one of Alt. 4-1 to Alt. 4-2 below may be applied.

### {Alt. 4-1}

Configuration (or enabling/disabling) of the UL group-based beam reporting / DL group-based beam reporting may be separately performed. For example, the DL group-based beam reporting may be enabled by a higher layer parameter for existing systems (for example, groupBasedBeamReporting or groupBasedBeamReporting-r17). On the other hand, the UL group-based beam reporting may be enabled by a new higher layer parameter (for example, ULgroupBasedBeamReporting).

### <<Case 4-1>>

When, for CSI report configuration (for example, CSI-report config), the higher layer parameter for the DL group-based beam reporting is enabled and the higher layer parameter for the UL group-based beam reporting is not enabled, DL group-based beam reporting for existing systems may be applied.

### <<Case 4-2>>

When, for CSI report configuration (for example, CSI-report config), the higher layer parameter for the DL group-based beam reporting is enabled and the higher layer parameter for the UL group-based beam reporting is also enabled, the first embodiment / second embodiment may be applied.

### <<Case 4-3>>

When, for CSI report configuration (for example, CSI-report config), the higher layer parameter for the DL group-based beam reporting is not enabled and the higher layer parameter for the UL group-based beam reporting is enabled, Alt. 4-1-a / Alt. 4-1-b below may be applied.

### - Alt. 4-1-a

The third embodiment may be applied, and the UL group-based beam reporting may be performed. This case may mean that in addition to the first embodiment / second embodiment, the third embodiment is supported.

### - Alt. 4-1-b

The UE may not assume Case 4-3 (for example, the case that only the higher layer parameter for the UL group-based beam reporting is enabled). In other words, configuration for performing only the UL group-based beam reporting may not be supported.

### {Alt. 4-2}

The first embodiment (at least one of Option 1-1 to Option 1-4) / second embodiment (at least one of Option 2-1 to Option 2-2) may be configured (for example, enabled) by a new higher layer parameter. When the enabling is performed by the new higher layer parameter, the UE may employ the first embodiment (at least one of Option 1-1 to Option 1-4) / second embodiment (at least one of Option 2-1 to Option 2-2).

### <Variation>

The CSI reports in the first to fourth embodiments may each include panel information. For example, in the DL group-based beam reporting / UL group-based beam reporting, the UE may include, in the CSI report, information related to a panel index. The UE may report single panel index information for each CRI/SSBRI to be reported. Alternatively, the UE may report single panel index information for each resource group to be reported.

### <UE Capability Information>

In the above-described first to fourth embodiments, the following UE capabilities may be configured. Note that the following UE capabilities may each be used interchangeably with a parameter (for example, a higher layer parameter) configured for the UE by a network (for example, the base station).

UE capability information related to whether to support UL group-based beam reporting may be defined.

UE capability information related to whether to support the UL group-based beam reporting in the first embodiment (at least one of Option 1-1 to Option 1-4), the second embodiment (at least one of Option 2-1 to Option 2-2), and the third embodiment (at least one of Option 3-1 to Option 3-2) may be defined.

The first to fourth embodiments may be applied to a UE that supports/reports at least one of the UE capabilities described above. Alternatively, the first to fourth embodiments may be applied to a UE configured from a network.

### (Supplementary Note)

Regarding one embodiment of the present disclosure, the following supplementary notes of the invention will be given.

### {Supplementary Note 1}

A terminal including: a receiving section that receives resource information related to a channel state information resource available for UL group-based beam reporting; and a control section that performs, based on the resource information, channel state information reporting including at least one of UL group-based beam reporting and DL group based-beam reporting.

### {Supplementary Note 2}

The terminal according to supplementary note 1, wherein the control section performs the UL group-based beam reporting and the DL group-based beam reporting using a same resource index of a same group included in one channel state information report.

### {Supplementary Note 3}

The terminal according to supplementary note 1 or 2, wherein the control section performs each of the UL group-based beam reporting and the DL group-based beam reporting using at least one of a different group and a different resource index included in one channel state information report.

### {Supplementary Note 4}

The terminal according to any one of supplementary notes 1 to 3, wherein the control section performs each of the UL group-based beam reporting and the DL group-based beam reporting using a different channel state information report.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

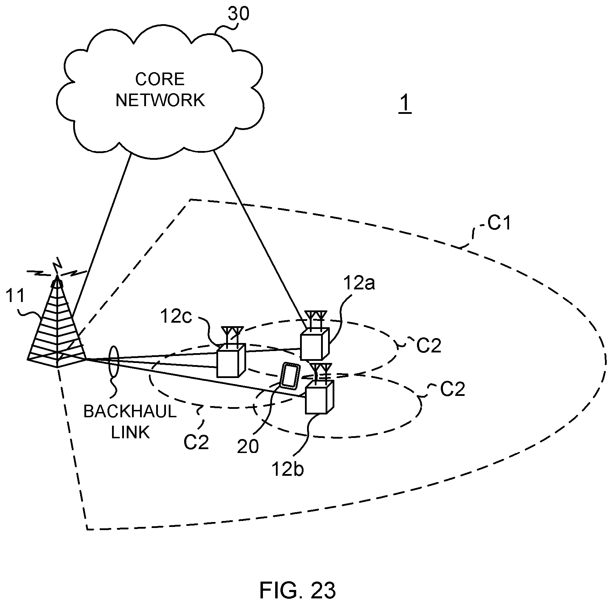

FIG. 23 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are transmitted on the PDSCH. User data, higher layer control information and so on may be transmitted on the PUSCH. The Master Information Blocks (MIBs) may be transmitted on the PBCH.

Lower layer control information may be transmitted on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be used interchangeably with "DL data", and the PUSCH may be used interchangeably with "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be used interchangeably.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be transmitted by means of the PUCCH. By means of the PRACH, random access preambles for establishing connections with cells may be transmitted.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be transmitted. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be transmitted as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be transmitted as an uplink reference signal (UL-RS). Note that DMRS may be referred to as a "user terminal specific reference signal (UE-specific Reference Signal)."

### (Base Station)

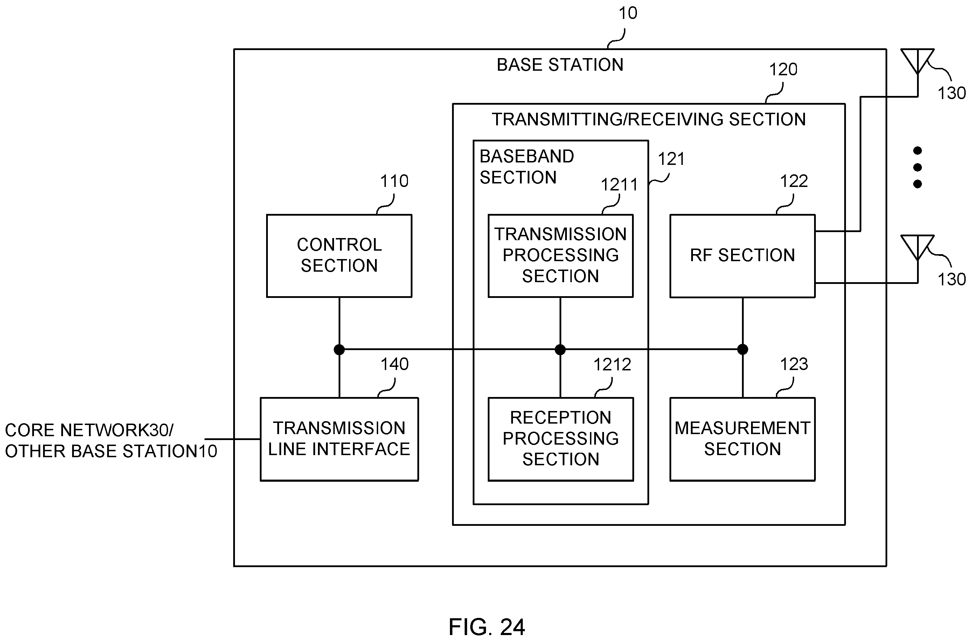

FIG. 24 is a diagram to show an example of a structure of the base station according to one embodiment. The base station 10 includes a control section 110, a transmitting/receiving section 120, transmitting/receiving antennas 130 and a transmission line interface 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

The transmitting/receiving section 120 may transmit resource information related to a channel state information resource available for UL group-based beam reporting. The transmitting/receiving section 120 may receive a channel state information report including at least one of UL group-based beam reporting and DL group based-beam reporting reported from the terminal.

The control section 110 may indicate, for the terminal, resource information related to a channel state information resource available for UL group-based beam reporting.

### (User Terminal)

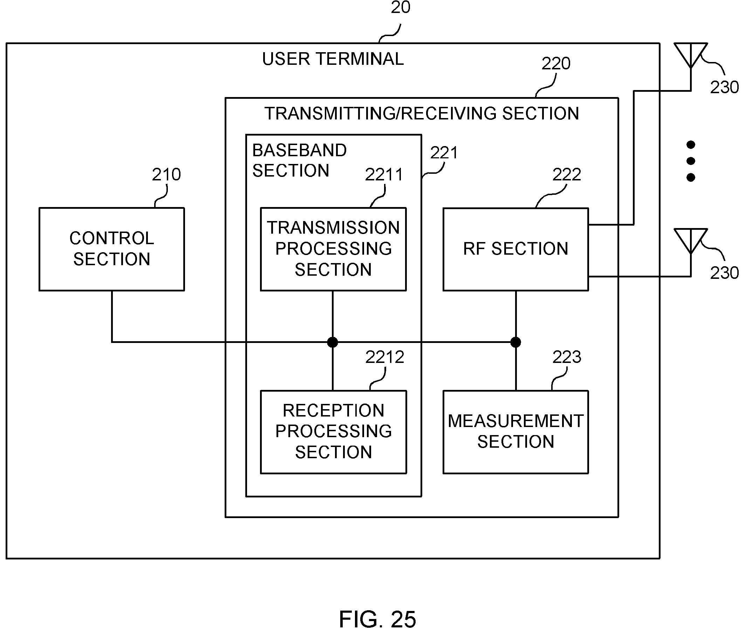

FIG. 25 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive resource information related to a channel state information resource available for UL group-based beam reporting.

The control section 210 may perform control to perform, based on the resource information, channel state information reporting including at least one of UL group-based beam reporting and DL group based-beam reporting.

The control section 210 may control to perform the UL group-based beam reporting and the DL group-based beam reporting using a same resource index of a same group included in one channel state information report.

The control section 210 may perform control to perform each of the UL group-based beam reporting and the DL group-based beam reporting using at least one of a different group and a different resource index included in one channel state information report.

The control section 210 may perform control to perform each of the UL group-based beam reporting and the DL group-based beam reporting using a different channel state information report.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

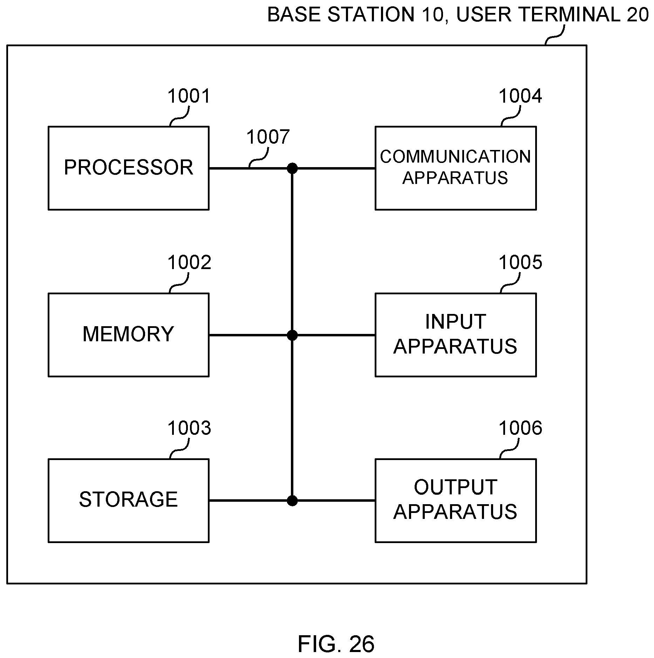

For example, a base station, a user terminal, and so on according to one embodiment of the present disclosure may function as a computer that executes the processes of the radio communication method of the present disclosure. FIG. 26 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be used interchangeably with a TTI having a time length exceeding 1 ms, and a short TTI (for example, a shortened TTI and so on) may be used interchangeably with a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a given signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to given values, or may be expressed using another corresponding information. For example, a radio resource may be specified by a given index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed using a management table. The information, signals, and so on to be input and/or output can be overwritten, updated, or added. The information, signals, and so on that has been output may be deleted. The information, signals, and so on that has been input may be transmitted to another apparatus.

Notification/Reporting of information is by no means limited to the aspects/embodiments described in the present disclosure, and other methods may be used as well. For example, notification of information in the present disclosure may be implemented using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of given information (for example, notification of "X") does not necessarily have to be performed explicitly, and can be performed implicitly (by, for example, not reporting this given information or reporting another piece of information).

A decision may be realized by a value (0 or 1) represented by one bit, by a boolean value (true or false), or by comparison of numerical values (e.g., comparison with a given value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", an "antenna port group", a "layer", "the number of layers", a "rank", a "resource", a "resource set", a "resource group", a "beam", a "beam width", a "beam angular degree", an "antenna", an "antenna element", a "panel", and so on may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, an artificial satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an autonomous car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

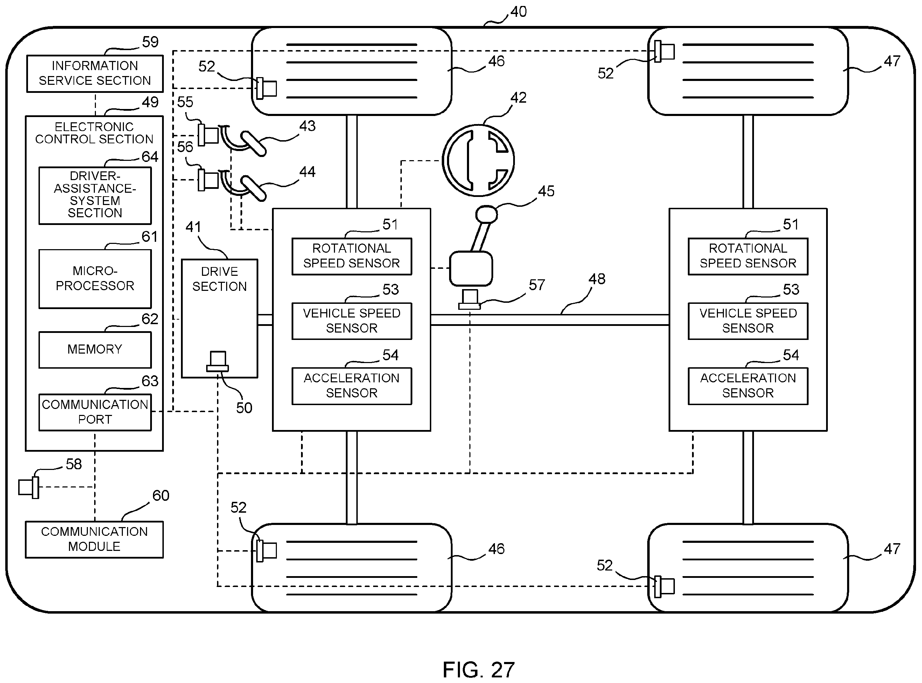

FIG. 27 is a diagram to show an example of a vehicle according to one embodiment. A vehicle 40 includes a drive section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The drive section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driver-assistance-system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driver-assistance-system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the drive section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the drive section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action.

"Decide/deciding (determine/determining)" may be used interchangeably with "assume/assuming", "expect/expecting", "consider/considering", and the like.

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other using one or more electrical wires, cables and printed electrical connections, and, as some non-limiting and non-inclusive examples, using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

Now, although the invention according to the present disclosure has been described in detail above, it is apparent to a person skilled in the art that the invention according to the present disclosure is by no means limited to the embodiments described in the present disclosure. Modifications, alternatives, replacements, etc., of the invention according to the present disclosure may be possible without departing from the subject matter and the scope of the present invention defined based on the descriptions of claims. The description of the present disclosure is provided only for the purpose of explaining examples, and should by no means be construed to limit the invention according to the present disclosure in any way.

## Claims

1. A terminal comprising:
a receiving section that receives information related to configuration of group-based beam reporting and information related to configuration of simultaneous UL transmission; and
a control section that, when both of the group-based beam reporting and the simultaneous UL transmission are enabled, controls to perform UL group-based beam reporting and DL group based-beam reporting in one channel state information report.

2. The terminal according to claim 1, wherein
the control section performs the UL group-based beam reporting and the DL group-based beam reporting using a same resource index of a same group included in the one channel state information report.

3. The terminal according to claim 1, wherein
the control section performs each of the UL group-based beam reporting and the DL group-based beam reporting using at least one of a different group and a different resource index included in the one channel state information report.

4. The terminal according to claim 1, wherein
the one channel state information report includes a field indicating whether the group-based beam reporting is UL group-based beam reporting.

5. A radio communication method for a terminal, the radio communication method comprising:
receiving information related to configuration of group-based beam reporting and information related to configuration of simultaneous UL transmission; and
when both of the group-based beam reporting and the simultaneous UL transmission are enabled, controlling to perform UL group-based beam reporting and DL group based-beam reporting in one channel state information report.

6. A base station comprising:
a transmitting section that transmits information related to configuration of group-based beam reporting and information related to configuration of simultaneous UL transmission; and
a control section that performs indication so as to perform UL group-based beam reporting and DL group based-beam reporting in one channel state information report using the information related to the configuration of the group-based beam reporting and the information related to the configuration of the simultaneous UL transmission.
